# EUROPEAN PATENT SPECIFICATION

(11) **EP 4 352 940 B1**
(45) Date of publication and mention of the grant of the patent: **06.08.2025**
(21) Application number: 21732220.5
(22) Date of filing: 08.06.2021
(51) Int. Cl.: H04L 67/08, H04L 67/303, H04L 67/51, H04L 67/52, H04L 69/24

(54) **PROVIDING PROXIMITY COMMUNICATION SERVICES THROUGH I/O USER DEVICES TO A USER**
BEREITSTELLUNG VON PROXIMITÄTSKOMMUNIKATIONSDIENSTEN DURCH E/A-BENUTZERVORRICHTUNGEN AN EINEN BENUTZER
FOURNITURE DE SERVICES DE COMMUNICATION DE PROXIMITÉ PAR L'INTERMÉDIAIRE DE DISPOSITIFS UTILISATEUR E/S À UN UTILISATEUR

(43) Date of publication of application: 17.04.2024
(73) Proprietor: Telefonaktiebolaget LM Ericsson (publ), 164 83 Stockholm (SE)
(72) Inventor: ARNGREN, Tommy, 954 42 Södra Sunderby (SE); ÖKVIST, Peter, 973 41 Luleå (SE); HANNU, Hans, 976 31 Luleå (SE); BERGKVIST, Adam, 976 36 Luleå (SE); LINDSTRÖM, Daniel, 974 38 Luleå (SE); WÄNSTEDT, Stefan, 972 51 Luleå (SE); LINDERO, David, 977 51 Luleå (SE)
(74) Representative: Ericsson
(86) International application number: PCT/EP2021/065275
(87) International publication number: WO 2022/258147

(56) References cited:
- WO-A1-2020/249190
- WO-A2-2020/253961

## Description

### TECHNICAL FIELD

The present disclosure relates to a user terminal emulation server for providing communication services through one or more input and/or output (I/O) user devices to a user, a method for providing communication services through one or more I/O user devices to a user, and a corresponding computer program product.

### BACKGROUND

The market for user terminals is driven by the desire to provide users with increasingly advanced communication capabilities and other operational features within the constraints of a portable handheld form factor. The development requirements for user terminal are increasingly complex as designers seek to integrate a greater variety of user interfaces and advanced operational features within the portable handheld form factor. Advancements in operational features have required more highly integrated and faster processing circuits with greater circuit densities, which becomes more difficult under constraints on costs and power consumption.

This all-inclusive feature-rich approach for user terminal development does not satisfy all of the myriad of differing desires held by consumers. Moreover, the always-connected expectations of today's society obligates users to vigilantly keep their user terminals within reach or risk being unable to timely receive or initiate communication services.

Some approaches have been proposed which seek to replace the conventional user terminal with other types of user interfaces which can interface with server based services. For example, Sun Microsystems has proposed thin client stateless terminals through any one of which a user can access a user application executed by a server. The terminals include an integrated smart card reader which operates to authenticate users and enable a user to remove a smart card (logging the user off one terminal) to pause a session and subsequently insert the smart card into any other terminal (logging the user on the other terminal) to promptly resume the session from where the user left off.

WO 2020/249190 A1 discloses a user terminal emulation server maintaining a database identifying network addresses, UI capabilities, and communication protocols, of I/0 user devices. Communication sessions are established between a user terminal emulation application and a network entity and I/0 user devices proximately located to a user and provide a combined I/0 user interface. Delay profiles are determined between the application and the I/0 user devices. A downlink flow from the network entity is split into a plurality of downlink flow components assigned to the I/0 user devices. For each of the downlink flow components, the server formats the component for transmission to the assigned I/0 user device, initiates transmission of the formatted downlink flow component to the assigned I/0 user device, and controls timing for when the formatted downlink flow component is transmitted to the assigned I/0 user device based on the delay profile associated with the assigned I/0 user device.

### SUMMARY

Objects of the invention are a user terminal emulation server, a corresponding method and a corresponding computer program product as claimed in the appended independent claims. Preferred embodiments are covered by the appended dependent claims.

### BRIEF DESCRIPTION OF THE DRAWINGS

Aspects of the present disclosure are illustrated by way of example and are not limited by the accompanying drawings. In the drawings:
Figure 1 illustrates a system with a user terminal emulation server that operationally integrates sets of I/O user devices that are proximately located to users to logically form virtualized user terminals providing communication services in accordance with some embodiments of the present disclosure;
Figure 2 is a block diagram illustrating the user terminal emulation server communicating with various elements of a cellular communications network to provide communication services in accordance with some embodiments of the present disclosure;
Figures 3-5 are combined flowcharts of operations and related data flows between UserTags, I/O user devices, and the user terminal emulation server in accordance with some embodiments of the present disclosure;
Figures 6 and 7 are flowcharts of operations that may be performed by a user terminal emulation server to provide communication services through a set of I/O user devices in accordance with some embodiments of the present disclosure;
Figure 8 is a block diagram of components of an I/O user device which are configured to operate in accordance with some embodiments;
Figure 9 is a block diagram of components of a user terminal emulation server that are configured to operate in accordance with some embodiments of the present disclosure;
Figures 10 and 11 are combined flowcharts of operations and related data flows between UserTags, I/O user devices, and the user terminal emulation server in accordance with some further embodiments of the present disclosure; and
Figure 12 is a flowchart of operations that may be performed by a user terminal emulation server to signal an I/O user device to prepare for using an I/O user interface to provide a first communication service for a user through a network entity, in accordance with some embodiments of the present disclosure.

### DETAILED DESCRIPTION

Inventive concepts will now be described more fully hereinafter with reference to the accompanying drawings, in which examples of embodiments of inventive concepts are shown. Inventive concepts may, however, be embodied in many different forms and should not be construed as limited to the embodiments set forth herein. Rather, these embodiments are provided so that this disclosure will be thorough and complete, and will fully convey the scope of various present inventive concepts to those skilled in the art. The scope of the invention is defined by the appended claims.

Known prior-existing solutions do not acceptably support cloud-based software-defined smartphones or similar, in a way that can provide sufficiently seamless handoff of communication services between individual input and/or output ("I/O") devices ("IODs") or a set of I/O user devices which are proximately located to a user. When I/O user devices can be made available to a user, an unacceptable delay can occur between detecting presence of the user and establishing a communication service through the I/O user devices. Moreover, handoff between I/O user devices may not be available or may be supported in a discontinuous manner that results in dropped communication service or interruption of the communication service as a user moves.

Various embodiments disclosed herein are directed to providing a user terminal emulation server, e.g., as a cloud server resource, which emulates a user terminal using individual I/O user devices or a set of I/O user devices that are proximately located to a user and have requisite user interface (UI) capabilities to provide a user with the ability to obtain a communication service provided by a network entity. These embodiments can predict that an I/O user device or a set of I/O user devices will become proximately located to the user, and send a signal to prepare the I/O user device or the group of I/O user devices for use in a communication service in advance of the user becoming proximately located to the I/O user device. Upon arrival of the user, the I/O user device or the group of I/O user devices can be configured to already be used to provide the communication service of the network entity for the user or can more instantaneously be made available for providing the communication service.

A user can receive and initiate communication services without the necessity of a traditional all-inclusive feature-rich user terminal, i.e., a conventional smartphone, mobile phone, tablet computer, etc. The user terminal emulation server can adaptively combine the available UI capabilities of I/O user devices that are predicted to become proximate to a user to support provision of a communication service to the user before the user becomes proximately located to the I/O user devices. Dynamic allocation of I/O user interface capabilities of I/O user devices whenever and wherever they are predicted to become proximately located to a user enables efficient and flexible use of existing hardware, such as televisions, conference phones, laptops, surveillance cameras, connected household appliances, connected cars, etc., that is capable of providing some UI functionality to user during a communication service. The user thereby has reduced need or no need to carry an expensive and all-inclusive user terminal, e.g. smart phone, that includes all necessary UI capabilities, display device, keyboard, speakers, etc. The user may instead carry a hardware device which operates to identify the user, referred to as a "UserTag", over a wireless communication interface, such as a near field communication (NFC) interface, to one or more of the I/O user devices.

Various embodiments disclosed herein may disrupt the traditional handset-centric mobile communication industry as the features and capabilities of what forms a user terminal are not constrained to the domain of mobile phone manufacturers. A user terminal emulation server can operate to provide a user terminal, which can also be referred to as a "SoftUE" or "soft phone", by means of a user terminal emulation application that is run by the user terminal emulation server.

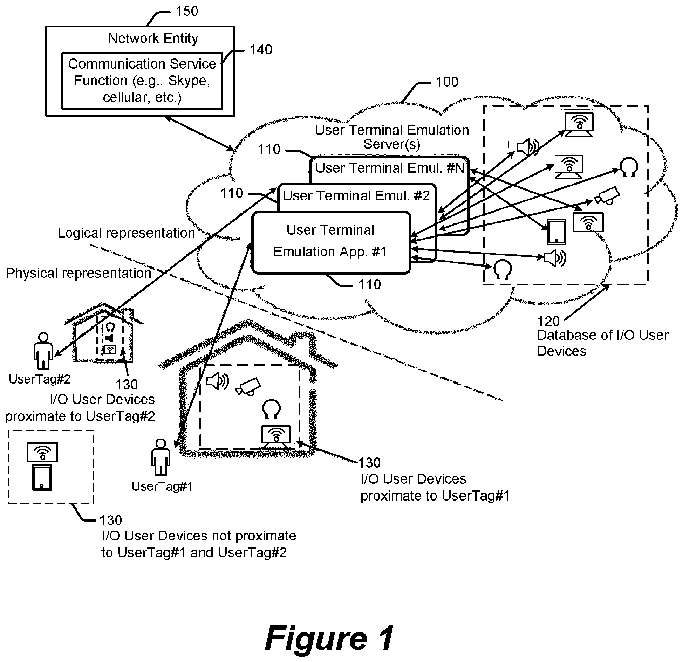

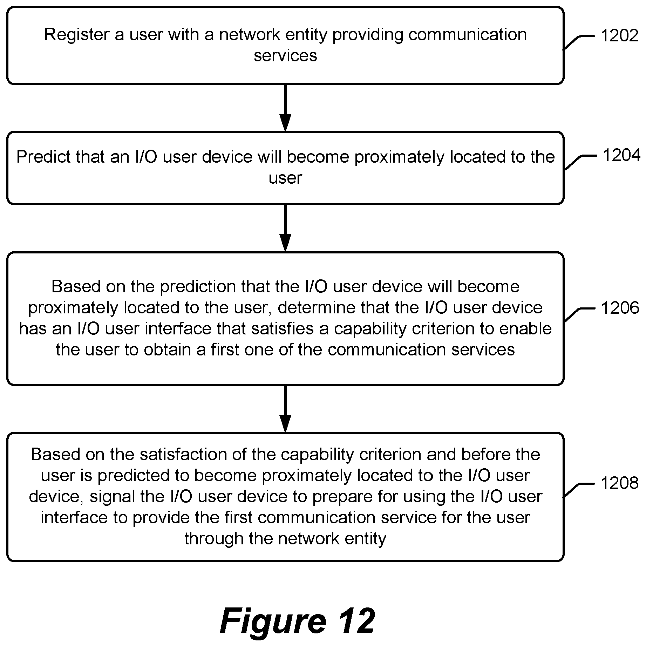

Figure 1 illustrates a system with a user terminal emulation server 100 that operationally uses individual I/O user devices 130 or integrates sets of I/O user devices 130 which are proximately located to users to logically emulate user terminals providing communication services through network entities 150 in accordance with some embodiments of the present disclosure. Figure 12 is a flowchart of operations that may be performed by the user terminal emulation server 100 to signal an I/O user device 130 to prepare for using an I/O user interface of the I/O user device 130 to provide a first communication service for a user through the network entity 150, in accordance with some embodiments of the present disclosure.

Referring to Figures 1 and 12, the user terminal emulation server 100 may be a cloud resource that is remotely networked to the I/O user devices 130, or may be more proximately located on a shared network with the I/O user devices 130, e.g., in an edge cloud. The user terminal emulation server 100 is configured to register 1202 a user with a network entity 150 that provides communication services for the user, such as by registering the user with a Voice Over Internet Protocol (VoIP) service, videoconference service (e.g., Teams, Skype, etc.), media content streaming service (e.g., Netflix, HBO, Hulu, etc.), gaming service (e.g., online game application), etc. The communication services can include, without limitation, Voice over IP and/or Video Over IP calling (e.g., Skype, Microsoft Teams, etc.), streaming media (e.g., Netflix, HBO, Hulu, etc.), online gaming, etc. The user terminal emulation server 100 is further configured to predict 1204 that one or more of the I/O user devices 130 will become proximately located to the user and, based on the prediction that the I/O user device 130 will become proximately located to the user, determine 1206 that the I/O user device 130 has an I/O user interface that satisfies a capability criterion to enable the user to use a first one of the communication services provided by the network entity 150. Moreover, based on the satisfaction of the capability criterion and before the user is predicted to become proximately located to the I/O user device 130, the user terminal emulation server 100 is further configured to signal 1208 the I/O user device 130 to prepare for using the I/O user interface to provide the first communication service for the user through the network entity 150.

Users may carry a hardware tag, a.k.a. "UserTag" in Figure 1, which is capable of transmitting a user identifier through a communications interface, such as a near-field communications interface (e.g., Bluetooth, Bluetooth low energy (BLE), near field communication (NFC), RFID, etc., or combinations thereof), for receipt by one or more of the I/O user devices 130 which are proximately located to the user. One type of UserTag can be a simple stand-alone electronic device having limited capability for transmitting an identifier through a near-field communications interface. Another type of UserTag can be a smartphone or smartwatch having cellular connectivity that transmits a cellular identity (e.g., from a SIM card) or an application identity through a cellular interface or a near-field communications interface.

In one example embodiment which will be explained in further detail below, the user terminal emulation server 100 can operate to provide seamless handoff of a videoconference service is presently being provided to a first user through the network entity 150 from a first I/O user device 130 to a second I/O user device 130 as the first user walks down a building corridor. For example, the first I/O user device 130 may be located at an entrance to the building corridor and the second I/O user device 130 may be located further down the building corridor. The user terminal emulation server 100 determines that the first user is presently proximately located to the first I/O user device 130 based on receiving a report from the first I/O user device 130 which provides the user identifier of the sensed UserTag#1 associated with the first user. Responsive to an incoming request from the network entity 150 or from the first user to establish a videoconference service, the user terminal emulation server 100 uses the I/O user interface of the first I/O user device 130 to provide the videoconference service.

The user terminal emulation server 100 predicts the second I/O user device 130 will become proximately located to the user, such as based on being configured to know relative locations of the first and second I/O user devices 130 and/or from learning that users become proximately located to the second I/O user device 130 within a threshold amount of time after being proximately located to the first I/O user device 130. Alternatively or additionally, the user terminal emulation server 100 may predict the second I/O user device 130 will become proximately located to the user based on being informed of a location of the user by a satellite-based positioning system (e.g., GNSS, GPS, etc.), cellular-based positioning system, etc.

The user terminal emulation server 100 can determine that the second I/O user device 130 has an I/O user interface that satisfies a capability criterion to enable the first user to use the videoconference service provided by the network entity 150, and can signal the second I/O user device 130 to prepared for using the I/O user interface to provide the videoconference service for the first user. For example, as will be explained further detail below, the user terminal emulation server 100 may initiate routing of videoconference service traffic to the second I/O user device 130 before the first user is predicted to become proximately located to the second I/O user device 130. The second I/O user device 130 may perform one of the following operations with the videoconference service traffic: initiate playout of the videoconference service traffic through the I/O user interface; buffer the videoconference service traffic for subsequent playout through the I/O user interface responsive to the user becoming proximately located to the second I/O user device 130; and discard the videoconference service traffic until the user becomes proximately located to the second I/O user device 130.

The identity of a user, e.g., the first user, may alternatively or additionally be operationally determined by biometrics operations performed by, e.g., one or more of the I/O user devices 130. The biometrics operations may include, without limitation, one or more of voice recognition, image/face recognition, eye recognition, fingerprint recognition, or a combination thereof. The user identity may be determined based on credential provided by the user when, e.g., logging into an application or account. The user identity may be determined from information provided by a cell phone, such as from the subscription SIM, and the user's proximity of the cell phone to one or more of the I/O user devices 130 can be determined using the phone's near-field communications (NFC) capability.

A user identifier, a UserTag identifier, and a user terminal application can be logically associated with each other in a database repository 120 during a user registration process or as part of another setup process. For example, during a user registration process a user may obtain an account login identifier (serving as the user identifier) that is registered in the database repository 120 as being associated with a UserTag identifier for a physical UserTag that has been provided to (e.g., purchased by) the user and being associated with a user terminal application that emulates a user terminal having defined capabilities (e.g., a cell phone providing cellular and over-the-top voice-over-IP communication services).

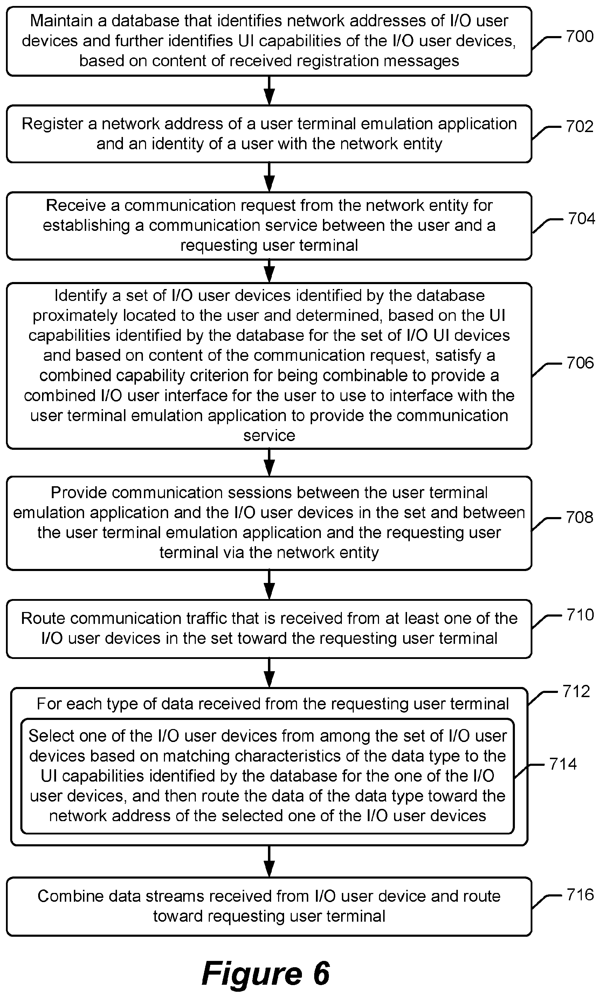

Operations that can be performed by the user terminal emulation server 100 to provide communication services to users are described below with further reference to Figure 6. Referring to Figures 1 and 6, the user terminal emulation server 100 maintains 700 a database repository 120 that identifies network addresses of I/O user devices 130 and further identifies UI capabilities of the I/O user devices 130, based on content of received registration messages. The capabilities of the I/O user devices 130 may be logically arranged in the repository 120 based on the type of UI capability provided, e.g., display device, microphone, headphone or ear speaker (e.g., Bluetooth ear speaker), loudspeaker, keyboard, and may be further arranged based on quality of service characteristics provided by the UI capability (e.g., mono or stereo speaker, speaker maximum volume, display screen size, display maximum resolution, etc.).

An I/O user device 130 may communicate a registration message, containing its network address and UI capabilities, to the user terminal emulation server 100 responsive to an initial set up operation, to being connected to a new communication network, and/or responsive to another defined event for triggering generation of a registration message. The registration messages may include a geographic location of the I/O user device 130, which can be stored in the database repository 120. The I/O user devices 130 may communicate with the server 100 via a data network (e.g., Internet and/or private network) using a WiFi transceiver, Bluetooth transceiver, cellular transceiver, light communication transceiver (LiFi), and/or another RF or light communications transceiver.

The user terminal emulation server 100 registers (e.g., 1202 in Fig. 12) a user with the network entity 150 providing communication services, such as by registering 702 an identity of a user with the network entity 150 and may further register a network address of a user terminal emulation application 110 with the network entity 150. The network entity 150 provides a communication service function 140 which may, for example, correspond to an over-the-top Voice Over Internet Protocol (VoIP) service, videoconference service (e.g., Teams, Skype, etc.), media content streaming service (e.g., Netflix, HBO, Hulu, etc.), gaming service (e.g., online game application), Internet browser service, a cellular communication service, etc. The user terminal emulation application 110 is executed by the user terminal emulation server 100. A user terminal emulation application 110 may run one or more applications that are normally run by a smart phone, such as a VoIP service application, a video conference service application, media content streaming application, online game application, Internet browser application, etc.

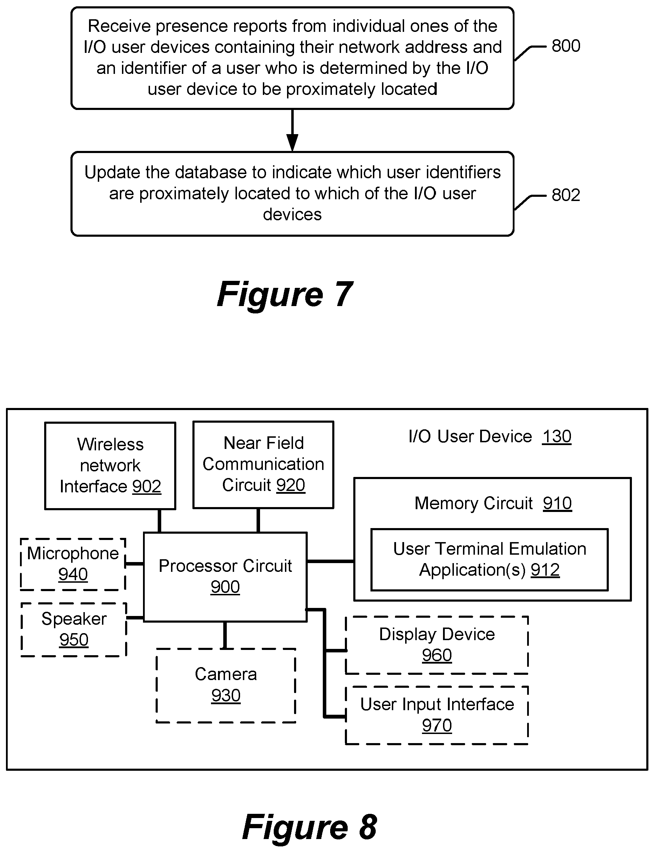

As illustrated in Figure 1, in some embodiments a different instantiation of the user terminal emulation application 110 is hosted by the server 100 for each user who is to be provided communication services (i.e., illustrated user terminal emulation applications #1-#N corresponding to users 1-N). The user terminal emulation application 110 may perform registration of the user with the network entity 150 and setup of a communication service with a user responsive to communication requests in accordance with the operations of Figure 7.

When the communication service function 140 of the network entity 150 is a VoIP service, the operation to register 702 the network address of the user terminal emulation application and the identity of the user with the network entity 150 can include registering the network address of the user terminal emulation application 110 and the identity of the user with a network server of a VoIP communication service provider.

When the communication service function 140 of the network entity 150 is a cellular communication service, the operation to register 702 the network address of the user terminal emulation application and the identity of the user with the network entity 150 can include registering the network address of the user terminal emulation application 110 and the identity of the user with a Home Subscriber Server (HSS) or other network node of a core network operated by a cellular communication service provider.

The user terminal emulation server 100 may receive the registration messages from the I/O user devices 130 using the Session Initiation Protocol (SIP)/Session Description Protocol (SDP), where each of the registration messages identifies the network address and the UI capability of one of the I/O user devices 130. The communication request may be received from the network entity 150 using the SIP/SDP, and the operation to provide communication sessions between the user terminal emulation application 110 and each of the I/O user devices 130 in the set, and between the user terminal emulation application 110 and the requesting user terminal may be performing using the SIP/SDP.

A registration message from an I/O user device 130 can include, for example, an IP address and port number, MAC address, fully qualified domain name (FQDN), and/or another network address, and further include information identifying the UI capability of the I/O user device 130. The I/O user device 130 may respond to becoming powered-on by communicating the registration message to the user terminal emulation server 100.

The user terminal emulation server 100 receives 704 a communication request from the network entity 150 for establishing a communication service between the user and a requesting user terminal, e.g., a cellular phone, computer with Skype application, etc. Responsive to the communication request, the user terminal emulation server 100 identifies 706 a set of I/O user devices among the I/O user devices 130 identified by the repository 120 that are determined to be proximately located to a location of the user or are predicted to become proximately located to the user. The user terminal emulation server 100 further determines, based on the UI capabilities identified by the repository 120 for the set of I/O user devices and based on content of the communication request, that the set of I/O user devices satisfies a combined capability criterion for being combinable to provide a combined I/O user interface for the user to interface with the user terminal emulation application 110 to provide the communication service.

Based on determining that the set of I/O user devices satisfies the combined capability criterion, the user terminal emulation server 100 provides 708 communication sessions between the user terminal emulation application 110 and the I/O user devices in the set and between the user terminal emulation application 110 and the requesting user terminal via the network entity 150. The communication request that is received 704 by the user terminal emulation application 110 may contain an indication of a minimum UI capability that must be provided to the user during the communication service, such as: speaker only; combination of speaker and microphone; display only; combination of display device, speaker, and microphone; etc. The combined capability criterion which is used by the server 100 to determine whether a communication service can be provided and by which set of I/O user devices, may thereby be defined based on the minimum UI capability that is indicated by the communication request.

The user terminal emulation server 100 then routes 710 communication traffic that is received from at least one of the I/O user devices in the set toward the requesting user terminal via the network entity 150. For each data type that is received as communication traffic from the requesting user terminal, the user terminal emulation server 100 selects one of the I/O user devices from among the set of I/O user devices based on matching characteristics of the data type to the UI capabilities identified by the repository 120 for the one of the I/O user devices, and then routes the data of the data type toward the network address of the selected one of the I/O user devices.

As will be explained in further detail below, the server 100 may also combine 716 data streams are received from the I/O user devices in the set, and route the combined data streams towards the requesting user terminal, e.g., via the network entity 150.

The user terminal emulation server 100 (e.g., the application 110 or an I/O user device handler described below) may be responsible for tracking which I/O user devices are presently proximately located to a present location of the user and predicting which other I/O user devices will become proximately located to the user. Figure 7 is a flowchart of corresponding operations. The server 100 can receive 800 presence reports from individual ones of the I/O user devices containing their network address and an identifier of a user who is determined by the I/O user device to be proximately located. For example, an I/O user device may read a hardware tag, also referred to herein as a "UserTag", through a NFC communication interface, may sense biometric information from the user, identify the user through facial recognition performed on a video stream from a camera, and/or may perform other operations to detect presence of a user and to identify the user. Responsive to the presence reports, the server 100 updates 802 the repository 120 to indicate which user identifiers are proximately located to which of the I/O user devices.

With further reference to the example system of Figure 1, a set of I/O user devices 130 has been determined by the instantiated user terminal emulation application #1 to be proximately located to a location of a first user carrying UserTag#1, and to further have UI capabilities that are combinable to satisfy the combined capability criterion for providing a combined I/O user interface for the first user to use during a requested communication service. Application #1 responsively uses that set of I/O user devices 130 to provide a combined I/O user interface for use by the first user during a communication service via network entity 150 between the first user and another user terminal.

Similarly, another set of I/O user devices 130 has been determined by the instantiated user terminal emulation application #2 to be proximately located to a location of a second user carrying UserTag#2, and to further have UI capabilities that are combinable to satisfy the combined capability criterion for providing a combined I/O user interface for the second user to use during a requested communication service. Application #2 responsively uses that set of I/O user devices 130 to provide a combined I/O user interface for use by the second user during a communication service via network entity 150 between the second user and yet another user terminal.

Figure 1 also illustrates that another set of I/O user devices 130 is not proximately located to either UserTag#1 or UserTag#2. This other set of I/O user devices 130 may be predicted to become proximately located to the first or second user, e.g., within a threshold time, and therefore available for use by the user terminal emulation server 100 for providing the communication service to that user in the future. In accordance with some embodiments, the user terminal emulation application 100 (e.g., user terminal emulation application #1 or #2) and signaled the other set of I/O user devices 130 prepare them to use their respective I/O user interfaces provide the communication service for that user, such as will be described further below.

As explained above, the communication request which is requesting the establishment of a communication service with an identified user may be initiated by the network entity 150 using the identity of the user, and maybe also using the network address of the user terminal emulation application, which was earlier registered with the network entity 150. However, the communication request may additionally or alternatively be generated by one of the I/O user devices 130 responsive to a command received from a proximately located user. For example, a user may operate a user interface provided by one of the I/O user devices 130 to initiate a combined audio and video call with another user. The user terminal emulation server 100 receives the communication request along with the identity of the user, which may be sensed via the UserTag. The application 110 performs the identifying 706, providing 708, routing 710, selecting 712, and combining 716 operations described above for Figure 6 to set up and operate a communication service between the user and the other user via the network entity 150.

Further example systems and related operations will now be described to further illustrate how I/O user devices having different UI capabilities can be operationally combined to provide a combined UI that can be used by a user to satisfy the communication requirements of a communication service.

Further illustrative operations are described regarding an example embodiment in which a speaker device is one of the I/O user devices 130 in the set capable of playing a received audio stream and a microphone device is another one of the I/O user devices 130 in the set capable of sensing audio to output a microphone stream. Operations by the user terminal emulation server 100 (e.g., by one of the user terminal emulation applications) include updating the repository 120 based on content of registration messages from the speaker device and the microphone device to identify network addresses of the speaker device and the microphone device, and to identify UI capabilities of the speaker device as having a speaker capability and the microphone device as having a microphone capability. The speaker UI capabilities may identify a number of speakers provided, sound loudness capability, and/or other operational characteristics. The microphone UI capabilities may identify a number of microphones provided, sensitivity the microphones, and/or other operational characteristics. The speaker device and the microphone device are each identified as belonging to the set of I/O user devices that are determined to be proximately located to or are predicted to become proximately located to the location of the user (e.g., UserTag#1) and are further determined, based on the UI capabilities identified by the repository 120, to satisfy the combined capability criterion for being combinable to provide a combined I/O UI for the user to interface with the user terminal emulation application 110 to provide the communication service. Based on determining that the speaker device and the microphone device satisfy the combined capability criterion, further operations are performed to route a microphone stream received from the microphone device toward the requesting user terminal (e.g., via network entity 150). When an audio stream is received as communication traffic from the requesting user terminal the operations select the speaker device based on matching an audio characteristic of the audio stream to the speaker capability identified by the repository for the speaker device, and then route the audio stream toward the network address of the speaker device.

The example embodiment may include, when a display device is one of the I/O user devices in the set capable of displaying a received video stream, the operations to update the repository 120 based on content of registration messages to identify network addresses of the display device, and to identify UI capabilities of the display device as having a display capability. The display UI capabilities may identify a screen display size, aspect ratio, pixel resolution, video frame rates supported, whether display device supports shared user support via split screen configuration, and/or other operational characteristics. The display device is also identified as among the set of I/O user devices that is determined to be proximately located to or predicted to become proximately located to the location of the user and are further determined, based on the UI capabilities identified by the repository 120, to satisfy the combined capability criterion for being combinable to provide the combined I/O UI for the user to interface with the user terminal emulation application 110 to provide the communication service. Based on determining that the speaker device, the display device, and the microphone device satisfy the combined capability criterion, further operations respond to receipt of video stream as communication traffic from the requesting user terminal by selecting the display device based on matching a video characteristic of the video stream to the display capability identified by the repository 120 for the display device, and then routing the video stream toward the network address of the display device.

In the example embodiment the operations for routing the audio stream and the video stream toward the network addresses of the speaker device and the display device, respectively, may include when audio data and video data are received within a same stream from the requesting user terminal through a first communication session: separating the audio data from the video data; routing the audio data toward the network address of the speaker device through a second communication session; and routing the video data toward the network address of the display device through the second communication session or a third communication session.

The example embodiment may include, when a camera device is one of the I/O user devices in the set capable of outputting a camera stream, the operations update the repository 120 based on content of a registration message to identify a network address of the camera device and to identify a UI capability of the camera device as having a camera capability. The camera UI capabilities may identify a camera pixel count, resolution, image quality, light sensitivity, and/or other operational characteristics. The camera device is further identified as a member of the set of I/O user devices that are determined to be proximately located to the location of the user and is further determined, based on the UI capability identified by the repository 120, to satisfy the combined capability criterion for being combinable with the other I/O user devices in the set to provide the combined I/O UI for the user to interface with the user terminal emulation application 110 to provide the communication service. Based on determining that the camera device satisfies the combined capability criterion, further operations are performed to route the camera stream received from the camera device toward the requesting user terminal, e.g., via the network entity 150.

The operations for routing the microphone stream received from the microphone device and the camera stream received from the camera device toward the requesting user terminal, can include: receiving the microphone stream from the microphone device through a first communication session; receiving the camera stream from the camera device through the first communication session or a second communication session; combining the microphone stream and camera stream in a combined stream; and routing the combined stream toward the requesting user terminal through a third communication session, e.g., via the network entity 150.

The example embodiment may include, when a keyboard device is one of the I/O user devices in the set capable of outputting key selection data responsive to key selections by a user among keys of the keyboard device, the operations can update the repository 120 based on content of a registration message to identify a network address of the keyboard device and to identify a UI capability of the keyboard device as having a keyboard capability. The keyboard device capabilities may identify a key count, indication of whether the keyboard is a physical keyboard or a touch sensitive input device, and/or other keyboard capabilities. The keyboard device is further identified as a member of the set of I/O user devices that are determined to be proximately located to the location of the user or are predicted to become proximately located to the user, and is further determined, based on the UI capability identified by the repository 120, to satisfy the combined capability criterion for being combinable with the other I/O user devices in the set to provide the combined I/O UI for the user to interface with the user terminal emulation application 110 to provide the communication service. Based on determining that the keyboard device satisfies the combined capability criterion, further operations are performed to identify commands formed by the key selection data received from the keyboard and to perform operations that have been predefined as being triggered based on receipt of the identified commands.

The operations for routing the key selection data received from the keyboard device and microphone stream received from the microphone device, may include: receiving the key selection data from the keyboard device through a first communication session receiving the microphone stream from the microphone device through the first communication session or a second communication session; combining the key selection data and the microphone stream in a combined stream; and routing the combined stream toward the requesting user terminal through a third communication session, e.g., via the network entity 150.

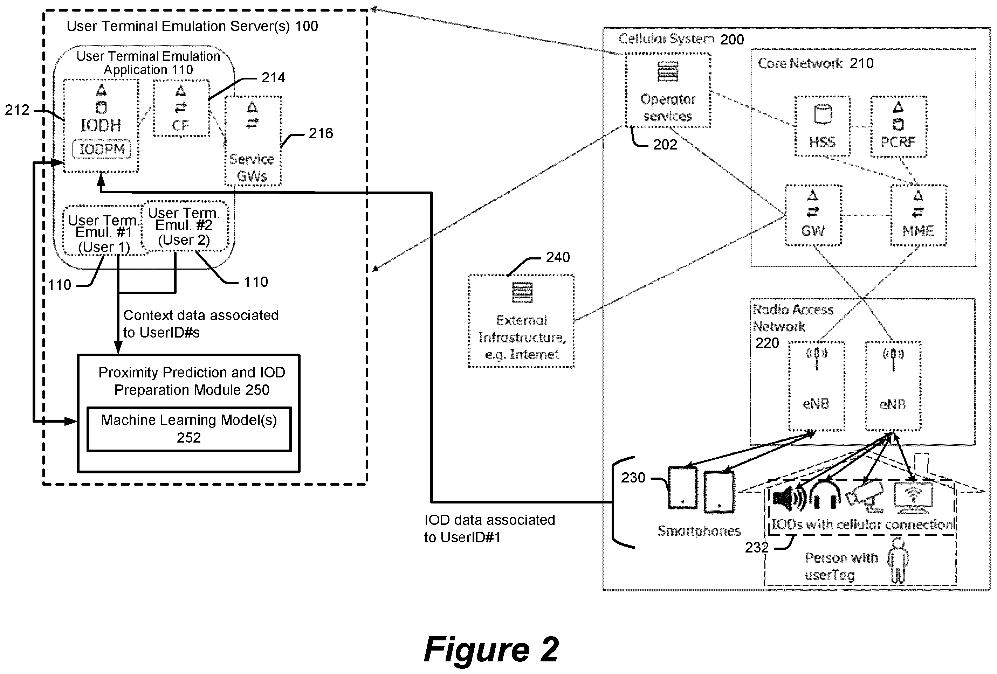

Figure 2 is a block diagram illustrating the user terminal emulation server 100 as an element of an operator service node 202 within a cellular system 200. Referring to Figure 2, the communication service function of the network entity 140 (Fig. 1) may be provided by the operator service node 202 or may be reached through external infrastructure 240, e.g., the Internet and/or private network. The server 100 may, for example, be implemented in the radio access network 220 to provide edge computing with faster responsiveness or may be implemented within another node of the cellular system 200. The user terminal emulation server 100 can include an I/O user device handler (IODH) 212, a control function (CF) 214, the instantiated user terminal emulation applications 110, and a service gateway (GW) 216. A user terminal emulation application 110 may run one or more applications that are normally run by a smart phone, such as a Netflix application, Facebook application, Skype application, Internet browser application, etc.

The IODH 212 may perform operations to manage the I/O user devices, such as to handle maintenance (700 in Fig. 7) of the repository 120 and/or perform registration (702 in Fig. 7) of the users and possibly also user terminal emulation applications 110. For example, the IODH 212 may operate to register with a Skype service server the IP address of a Skype application, which is run by or interfaced to the user terminal emulation application 110, and the user's Skype name. The CF 214 may be responsible for assigning an IP address to each user terminal emulation application 110. The IP address to be assigned by the CF 214 may be received from the core network 210 functionality such as a PDN-GW. The service GW 216 may interconnect the user terminal emulation server 100 to a PSTN network, packet data network gateway of a 3GPP (3rd Generation Partnership Project) system, etc. The cellular system 200 can include a Core Network 210 having a Home Subscriber Server (HSS), a Policy and Charging Roles Function (PCRF), gateway (GW) and Mobility Management Entity (MME) providing control signaling related to mobile terminal mobility and security for the radio access. The HSS contains subscriber-related information and provides support functionality for user authentication and user access to the system. The PCRF enables QoS control per data flow and radio bearer, by setting QoS criteria for each data flow, based on operator set policies and subscriber information. The GW can include a Serving GW (S-GW) and a Packet Data Network GW (PDN-GW), where the S-GW interconnects the core network 210 with the radio access network 220 and routes incoming and outgoing packets for the I/O user devices 232 and/or 130 and the user terminals 230. The PDN-GW interconnects the core network 210 with external infrastructure 240, such as the Internet, and allocates IP-addresses and performs policy control and charging.

Some I/O user devices 232 having cellular communication capability can communicate via, e.g., eNBs or other radio access nodes of a Radio Access Network 220 with the operator service node 202 via the core network 210. In the system of Figure 2, the user terminal emulation server 100 may handle set up of a communication service between a selected set of the I/O user devices, which are determined to be proximate to a user or predicted to become proximately located to the user, and a remote user terminal 230 (e.g., smart phone) via the cellular system 200.

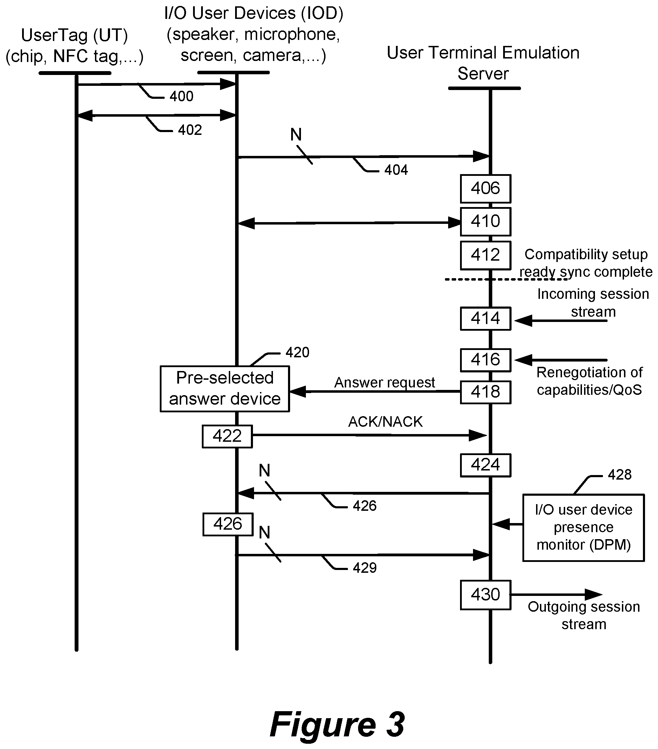

Figure 3 is a block diagram illustrating the user terminal emulation server 100 communicating in a different manner with various elements of a cellular system 200, which may operate as the network entity 140 (Fig. 1), to provide communication services in accordance with some embodiments of the present disclosure. The system of Figure 3 differs from the system of Figure 2 by the user terminal emulation server 100 being an Internet service within external infrastructure 240 outside of the cellular system 200. In the system of Figure 3, the CF 214 may determine the IP address to be assigned to different ones of the user terminal emulation applications 110 based on signaling from the Internet service within the external infrastructure 240.

The above and other operations will now be described in further detail in the context of three different example "use cases": 1) incoming call scenario; 2) outgoing call scenario; and 3) share of I/O user devices scenario (sharing of physical resources and/or capabilities).

### Use Case 1: Incoming call Scenario

This use case involves a user, with a UserTag or other way of being identified, being proximately located to or predicted to become proximately located to I/O user devices 130 having different UI capabilities when an incoming call is received by the user terminal emulation server. Although operations are explained below in the context of identifying a user through a physical UserTag carried by the user, these operations are not limited thereto and may be used with any other way of identifying a user, such as by sensing biometric information that identifies the user.

A user terminal emulation application 110 may be instantiated or otherwise activated responsive by an incoming call (service, session) targeting the UserTag. The user terminal emulation application 110 can identify subscriptions associated with the UserTag (i.e. the physical user) and preferred methods of communication (e.g., audio not video, audio and video, etc.) that have been specified by the user, and determines the UI capabilities of the I/O user devices that will be needed to satisfy the UI capabilities which may be specified for the incoming communication session. The user terminal emulation application 110 may ask the IODH to identify which I/O user devices 130 are proximately located to the UserTag or are predicted to become proximately located to the UserTag, and may further ask the IODH to determine or may determine itself whether the identified I/O user devices 130 are combinable to satisfy the UI capabilities specified by the incoming communication session. The user terminal emulation application 110 and/or the IODH may receive an ACK or NACK back on whether a sufficient set of I/O user devices 130 can be used to provide the communication service. If ACK, then the IODH may also sets the state of the I/O user devices 130 in the set to in-use to avoid another user terminal emulation application 110 attempting to utilize the same I/O user devices 130 as which are presently in use or about to become in use. In case of NACK, the user terminal emulation application 110 and/or the IODH can take different actions to setup a reduced UI capability communication service with the user depending on user settings, e.g. only allow sound-based communications instead of a combination of sound and video responsive to when no display device is presently available for use. An example of no display device being available may occur when the only display device that is proximately located to the user is presently being used by another user to receive information from another user terminal emulation application during an ongoing communication service or when no display device is proximately located to the user.

Figure 3 is a combined flowchart of operations and related data flows between UserTags, I/O user devices, and the user terminal emulation server in accordance with some embodiments of the present disclosure. Referring to Figure 3, a UserTag enters a room and signals 400 its presence to any proximately located and capable I/O user device in the room using a discovery beacon signal. Alternatively, one or more of the I/O user devices determines presence of the UserTag by polling 402, such as by periodically transmitting discover beacon signals that trigger responsive signaling by the UserTag. The I/O user devices that receive signaling indicated presence of the UserTag report 404 to the IODH in the user terminal emulation server along with a network address of the I/O user device (e.g., IP address, port number, MAC address, FQDN, etc.). The user terminal emulation application corresponding to the specific user (i.e., the UserTag) is updated 406 with respect to the detected user's presence. The IODH may operate to receive the notifications from the I/O user devices proximately located to the UserTag. Further UI capability discovery (synchronization) communications 410 are performed between the user terminal emulation server and the I/O user devices which reported the user's presence and/or with I/O user devices that predicted to become proximately located to the user such as based on the user presently being proximately located to another one of the I/O user devices. The I/O user devices are associated to the user in the repository, along with associated indications subscriptions, combinable UI capabilities provided by the set of I/O user devices which are proximately located to or predicted to become proximately located to the UserTag. By operation 412 the user via the UserTag is now known to be reachable within the system through an identified set of I/O user devices with identified UI capabilities (e.g., speakers yes/no, display yes/no, microphone yes/no, keyboard yes/no, etc.), thereby creating a logical virtualized user terminal through which the user may be provided in a communication service. The user may initiate a communication service through a touchscreen, voice command sensed by a microphone, performing a defined gesture observable by a camera, and/or other input provided to one of the proximately located I/O user devices.

In operation 414, an incoming session (e.g., video call) from a requesting user terminal which is directed to the user (UserTag) arrives at the user terminal emulation server for the user carrying the UserTag. In operation 416 the combinable UI capabilities of the available I/O user devices is compared to the UI requirements of the incoming session. When the UI requirements of the incoming session are not satisfied by the combinable UI capabilities of the I/O user devices, the user terminal emulation server may renegotiate 416 the required UI capabilities (e.g., QoS) of the incoming session. In contrast, when the UI requirements of the incoming session are satisfied by the combinable UI capabilities of the I/O user devices the user terminal emulation server prompts, via one or more of the available I/O user devices (e.g., a pre-selected answer device), the user carrying the UserTag to provide a session request answer (ACK/NACK). The user responds through the pre-selected answer device 420 to accept (ACK) or reject (NACK) the incoming session, to provide signaling 422 to the user terminal emulation server. When an ACK is received, operations 424 route an audio stream from the requesting user terminal to one of the I/O user devices in the set that has a speaker capability via one or more sessions 426, and routes a video stream from the requesting user terminal to another one of the I/O user devices in the set that has a display capability via one or more sessions 426. A data stream that is received from one of I/O user devices in the set through a one or more sessions 429 is routed 430 toward the requesting user terminal. When two or more data streams are received through one or more sessions 429 from the I/O user devices, they can be combined into a combined data stream that is routed 430 toward the requesting user terminal.

The user terminal emulation server may perform operations 428 to continuously monitor presence of the I/O user devices to determine when one or more of I/O user devices are no longer proximately located to the user such that they can no longer be included as part of the combined UI be provided during the ongoing communication session. The user terminal emulation server may substitute the UI capability of another I/O user device to the set being used by the user for the ongoing communication session responsive to a previous member of the set no longer having required presence. The user terminal emulation server may substitute the UI capability of another I/O user device that is predicted to become proximately located to the user as the user moves, and signal the other I/O user device to prepare for using its I/O user interface to support the ongoing communication session. As will be explained in further detail below, the user terminal emulation server can signal the I/O user device that is predicted to become proximately located to the user, to prepare the I/O user device for using the I/O user interface to provide the ongoing communication session for the user.

### Use case 2, Outgoing call

This use case involves a user, with a UserTag, being proximately located to or predicted to become proximately located to I/O user devices 130 having different UI capabilities when an outgoing call (communication session) is received by the user terminal emulation server. The I/O user devices 130 are associated to the identified user via the user terminal emulation server 100 which handles all communications sessions for the user while the associated I/O user devices 130 are managed by an IODH.

A user terminal emulation application 110 may be instantiated or otherwise activated responsive by an outgoing call being requested by a user carrying the UserTag. The user may initiate an outgoing call through a touchscreen, voice command sensed by a microphone, performing a defined gesture observable by a camera, and/or other input provided to a proximately located I/O user device.

The user terminal emulation application 110 can identify subscriptions associated with the UserTag (i.e. the physical user) and preferred methods of communication (e.g., audio not video, audio and video, etc.) that have been specified by the user, and determines the UI capabilities of the I/O user devices that will be needed to satisfy the UI capabilities which may be specified for the outgoing call. The user terminal emulation application 110 may ask the IODH to identify which I/O user devices 130 are proximately located to the UserTag and further ask, e.g., depending upon the answer, which other I/O user devices 130 are predicted to become proximately located to the user. The user terminal emulation application 110 may further ask the IODH to determine or may determine itself whether the identified I/O user devices 130 and/or other I/O user devices 130 are combinable to satisfy the UI capabilities specified by the outgoing call. The user terminal emulation application 110 and/or the IODH may receive an ACK or NACK based on whether a sufficient set of I/O user devices 130 can be used to provide the communication service. If ACK, then the IODH also sets the state of the I/O user devices 130 in the set to in-use to avoid another user terminal emulation application 110 attempting to utilize the same I/O user devices 130 as which are presently in use or about to be in use. In case of NACK, the user terminal emulation application 110 and/or the IODH can take different actions to setup a reduced UI capability communication service with the user depending on user settings, e.g. only allow sound instead of the preferred sound and video responsive to when no display device is presently available for use (e.g., when presently used by another user terminal emulation application 110 or when none is proximately located to the UserTag or predicted to become proximately located to the UserTag with a threshold time).

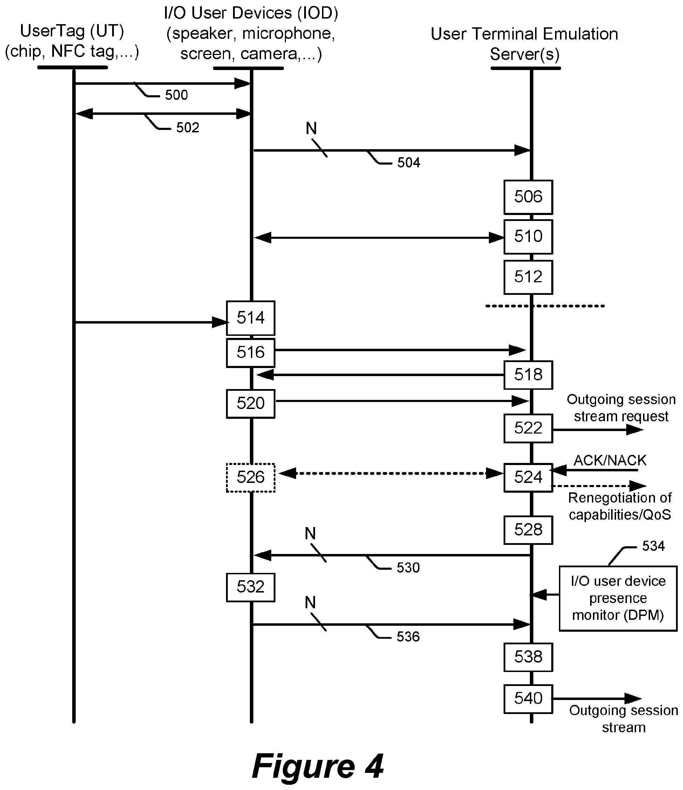

Figure 4 is a combined flowchart of operations for an outgoing call and related data flows between UserTags, I/O user devices, and the user terminal emulation server in accordance with some embodiments of the present disclosure. Referring to Figure 4, a UserTag enters a room and signals 500 its presence to any proximately located and capable I/O user device in the room using a discovery beacon signal. Alternatively, one or more of the I/O user devices determines presence of the UserTag by polling 502, such as by periodically transmitting discover beacon signals that trigger responsive signaling by the UserTag. The I/O user devices that receive signaling indicated presence of the UserTag report 504 to the IODH in the user terminal emulation server along with a network address of the I/O user device (e.g., IP address, port number, MAC address, FQDN, etc.). The user terminal emulation application corresponding to the specific user (i.e., the UserTag) is updated 506 with respect to the detected user's presence.

The IODH may operate to receive the notifications from the I/O user devices proximately located to the UserTag. Further UI capability discovery (synchronization) communications 510 are performed between the user terminal emulation server and the I/O user devices. The I/O user devices are associated to the user in the repository, along with associated indications subscriptions, combinable UI capabilities provided by the set of I/O user devices which are proximately located to the UserTag. By operation 512 the user via the UserTag is now known to be reachable within the system through an identified set of I/O user devices with identified UI capabilities (e.g., speakers yes/no, display yes/no, microphone yes/no, keyboard yes/no, etc.), thereby creating a logical virtualized user terminal through which the user may be provided in a communication service. The IODH may further predict what other I/O user devices will become proximately located to the user, such as within a threshold time and have combinable UI capabilities that satisfy the capability requirements. The user may initiate a communication service through a touchscreen, voice command sensed by a microphone, performing a defined gesture observable by a camera, and/or other input provided to one of the proximately located I/O user devices.

In operation 514, a user carrying the UserTag uses the UI of one of the I/O user devices to trigger 514 an outgoing call (e.g., video call), which triggers signaling 516 of the outgoing call to the user terminal emulation server. In operation 518 the IODH queries the user (e.g., displays a message, generates a sound, etc.) through one of the I/O user devices proximately located to the user to request the user to select among available types of communication methods that can be presently used for the outgoing call. One of the I/O user devices provides responsive signaling 520 to the IODH indicating the user's selected type of communication method for the outgoing call. In operation 522 the user terminal emulation server communicates an outgoing session stream request to the network entity 150, where the request may include an identifier of the calling user, identifier of the user terminal of the called user, and a quality of service for the communication session. In operation 522, the user terminal emulation server receives a communication session acceptance (ACK) or denial (NACK) from the network entity 150. When the communication session is denied, the user terminal emulation server may attempt to renegotiate 524 the requested communication session such as at a lower quality of service.

When the communication session is accepted (ACK), for each data type that is received 528 as communication traffic from the requesting user terminal, the user terminal emulation server selects one of the I/O user devices from among the set of I/O user devices based on matching characteristics of the data type to the UI capabilities identified by the repository for the one of the I/O user devices, and then routes 530 the data of the data type toward the network address of the selected one of the I/O user devices. The data originating ones of the I/O user devices transmit 532 data stream through one or more sessions 536 to the user terminal emulation server 100, which may combine 538 the data streams into a combined data stream that is routed 540 toward the called user terminals via the network entity 150.

The user terminal emulation server may continuously monitor 534 presence of the I/O user devices to determine when one or more of I/O user devices is no longer proximately located to the user such that it can no longer be included as part of the combined UI to be provided during the ongoing communication session and/or to determine when one or more of predicted soon-to-be proximately located I/O user devices becomes proximately located to the user such that it can be included as part of the combined UI to be provided during the ongoing communication session. The user terminal emulation server may substitute the UI capability of another I/O user device, e.g., an I/O user device that is predicted to become proximately located to the user, to the set being used by the user for the ongoing communication session responsive to a previous member of the set no longer having required presence. As will be explained in further detail below, the user terminal emulation server can signal the I/O user device that is predicted to become proximately located to the user, to prepare the I/O user device for using the I/O user interface to provide the ongoing communication session for the user.

### Use case 3, User Sharing I/O User Devices (Physical Resources, UI Capabilities)

The third use case is directed to a scenario where two or more users are located in a physical area having a number of I/O user devices with combined UI capabilities that are insufficient to satisfy the UI requirements needed to support time overlapping communication sessions without sharing of some of the I/O user devices by the two users. In this case, both users' ID entities, i.e. UserTags will be detected in the proximity of some I/O user devices which the IODH then associates to the users' respective user terminal emulation applications 110.

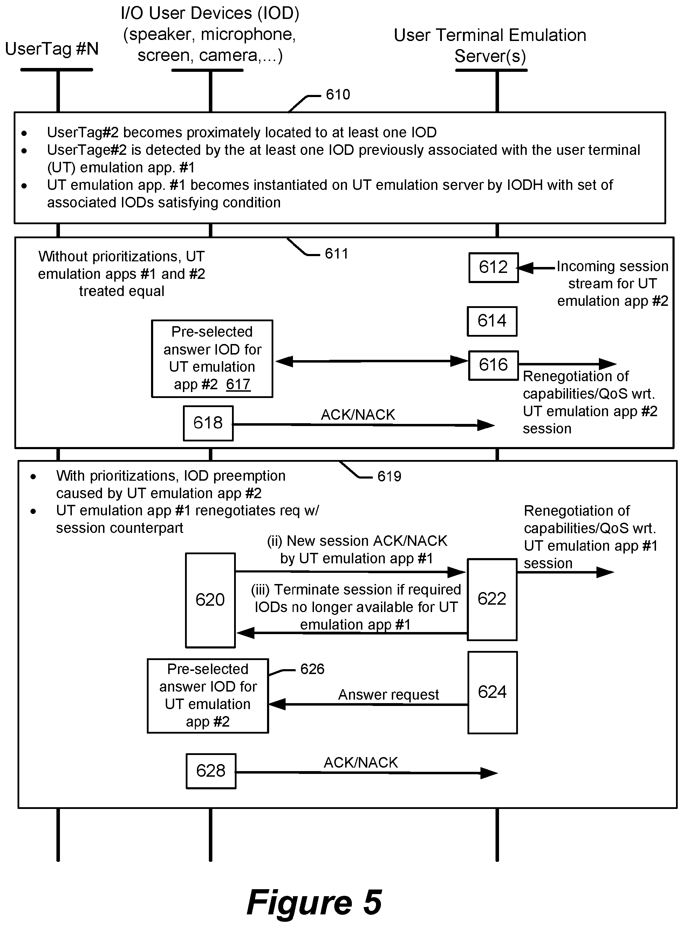

In the illustration of Figure 5, user terminal emulation application #1 is already handling an ongoing communication session in which some of the associated I/O user devices are allocated and in use by a first user corresponding to UserTag #1; this means the example starts after block 430 in Figure 3. At that point in time, another second user carrying UserTag#2 enters the physical area.

In block 610 the UserTag#2 becomes proximately located to or is predicted to become proximately located to at least one of the I/O user devices being presently utilized by user terminal emulation application #1. For example, the at least one of the I/O user devices detects UserTag#2 or another I/O user device detects UserTag#2 and the UserTag#2 is predicted to become proximately located to the at least one of the I/O user devices, e.g., within a threshold time. The user terminal emulation application #2 is responsively instantiated on the user terminal emulation server 100 by the IODH.

In block 612, a request for a new communication session is received which is intended for the user terminal emulation application #2. In block 614 the IODH considers priorities among the user terminal emulation applications have been instantiated. The IODH compares subscriptions of currently hosted (ongoing) user terminal emulation application #1 sessions to those of the new incoming request for a communication session towards the user terminal emulation application #2.

If a prioritization is not identified, the user terminal emulation applications are treated equally so that available I/O user devices with their UI capabilities are allocated on a first-come-first-served manner. In contrast, if a prioritization is identified, the IODH operates to: assign a priority to certain I/O user devices for the user terminal emulation application having the highest priority according to defined QoS/capability prioritization criteria; with certain UI capabilities present at certain types of I/O user devices, some UI capabilities are operationally shared between the first and second users (e.g., a sufficiently large display screen can be split in half with the halves respectively assigned to the first and second users).

In the present scenario, the user terminal emulation applications #1 and #2 are treated equally without prioritization, which applies to all operations within reference block 611.

In block 616 the IODH assesses the request to capabilities of the second user and user terminal emulation application #2 (considering prioritization's established in the previous step, if any). If the incoming request is not supported (e.g., there are no available or insufficient available I/O user devices determined (via query 617 to I/O user devices) to satisfy the required UI capabilities) by the user terminal emulation application #2 irrespective of any priorities, the IODH may operate to negotiate UI capabilities/QoS with the network entity which sent the session request for the second user. In contrast, if the incoming request is supported by the UI capabilities provided by the user device emulation application #2 for the requested communication session, as determined by the user terminal emulation application #2 querying 618 the available I/O user devices, then an ACK is communicated to the network entity 150.

If the incoming communication request can be supported by the user terminal emulation application #2 when granted some priority for use of one or more of the I/O user devices being presently used by the user terminal emulation application #1, the operations of block 619 can be performed to preempt or cause sharing of the one or more of the I/O user devices that are presently being used by the user terminal emulation application #1. The IODH and/or the user terminal emulation application #1 may then renegotiate 622 with the network entity 150 the required UI capabilities of the communication session of the user terminal emulation application #1 for the first user. The user terminal emulation application #1 may receive a session ACK/NACK generated 620 by the one or more of the preempted or shared I/O user devices with the user terminal emulation application #2 indicating what UI capabilities are available for use by the user terminal emulation application #1, and may responsively terminate the existing communication session if the required UI capability provided by the I/O user devices is no longer sufficient for use by the user terminal emulation application #1 for the communication session.

In block 624, the user terminal emulation application #2 queries the second user through a preselected one of the I/O user devices for whether the requested communication session is accepted. The preselected one of I/O user devices may display 626 a prompt querying the second user for an answer, which is provided 628 as an ACK/NACK to the user terminal emulation application #2. When the second user accepts the communication session (ACK), a communication service is established between the second user and a remote user terminal through the user terminal emulation application #2 and the network entity 150.

An I/O user device presence monitor may operate as a function of the IODH to monitor (continuously, periodically, or responsive to occurrence of a defined event) an ongoing communication session to ensure that all UI capabilities provided by the set of I/O user devices remains proximately located and operationally available to the user.

Exchange of messages between the different system entities can be carried out using the Session Initiation Protocol (SIP) with the Session Description Protocol (SDP) with possible some minor changes regarding the current supported methods in the protocols and media formats. Using SIP/SDP may be advantageous as the connections between the I/O user devices and user terminal emulation applications can be a SIP session which may set up in a manner similar to that between two VoIP clients.

More generally, the operations performed by the user terminal emulation server can include receiving another communication request from the network entity for establishing another communication service between another user and another requesting user terminal. Responsive to the another communication request, the operations determine whether another set of I/O user devices among the I/O user devices identified by the repository are determined to be proximately located to a location of the another user or are predicted to become proximately located to the another user and available for use for the another communication service. A further determination is made, based on the UI capabilities identified by the repository for the another set of I/O user devices, that the set of I/O user devices satisfy the combined capability criterion for being combinable to provide a combined I/O UI for the another user to interface with another user terminal emulation application to provide the another communication service. Based on determining that no other set of I/O user devices is determined to satisfy the combined capability criterion, available for use by the another communication service, and proximately located to or predicted to become proximately located to the location of the another user, the operations responsively configure one of the I/O user devices in the set of I/O user devices that is proximately located to or predicted to become proximately located to the another user but is currently being used by the user, to operate to provide a shared UI that is used by the user while the communication service is continuing to be provided to the user and that is further used by the another user while the another communication service is provided to the another user.

In one example, information that is directed to the user can be routed for display in one half of a screen of the display device, and information that is directed to the other user can be routed for display in the other half of the screen of the display device. In another example, a keyboard can be shared by two users who identify themselves via the keyboard (e.g., by typing a user ID, scanning the UserTag, biometric scan, etc.) at the time they are entering information, so that the server can selectively route the keyboard entries to the correct one of the two user terminal emulation applications.

### Predict User Proximity and Prepare I/O User Devices for Communication Service

The above description has explained various operations for determining that an I/O user device has an I/O user interface that satisfies a capability criterion to enable a user to use a communication service through a network entity, and to use the I/O user device for the communication service. Further operations are now described for predicting that an I/O user device will become proximately located to a user and responsively signaling the I/O user device to prepare for using the I/O user interface to provide the communication service for the user.

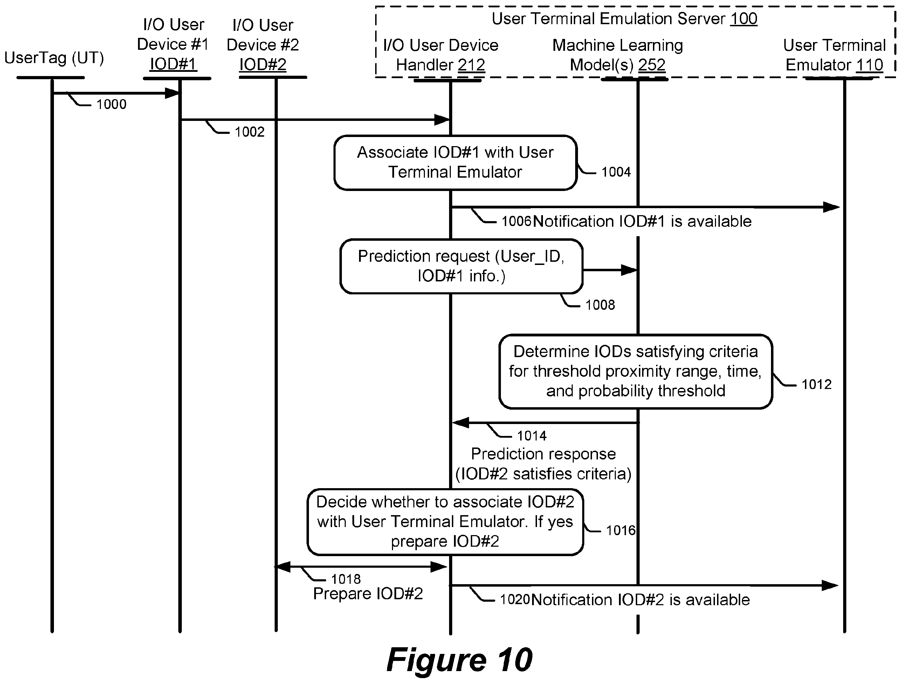

Figure 10 illustrates a combined flowchart of operations and related data flows between UserTags, I/O user devices, and the user terminal emulation server 100 to predict that a user will become proximately located to an I/O user device and to responsively signal the I/O user device to prepare for using the I/O user interface to provide the communication service for the user, in accordance with some embodiments of the present disclosure.

Referring to Figure 10, a first I/O user device (IOD#1) detects 1000 a UserTag transported by the user, and sends 1002 to the user terminal emulation server 100 IOD data that is obtained from the UserTag or determined based on sensing characteristics of the UserTag. The IOD data may include a user identifier, user preferences relating to one or more types of communication services, and/or user mobility information (e.g., location, speed of movement, direction of movement, etc.). The user preferences indicated by the IOD data may include one or more of: whether the user prefers to use headset audio or loudspeaker audio, the user's speaker loudness preference, whether the user prefers to participate in online meetings using or without using camera video, the user's written language preference, the user's keyboard layout configuration preference, the user's video characteristic preference (e.g., minimum text size preference), etc.

In the example of Figure 10, the IOD data is received by an I/O user device handler (IODH) 212 which associates 1004 the first I/O user device (IOD#1) with a user terminal emulator 110, and sends 1006 a notification to the user terminal emulator 110 indicating that the first I/O user device (IOD#1) is presently proximately located to the user and available to provide a communication service for the user. The IODH 212 sends 1008 a prediction request containing at least part of the IOD data, such as the user identifier and an indication that the first I/O user device (IOD#1) is presently proximately located to the user.

In some embodiments, the prediction request is provided to a machine learning model 252, which predicts 1012 (also 1204 in Fig. 12) which, if any, other I/O user device(s) will become proximately located to the user based on content of the received prediction request. In one embodiment, the machine learning model 252 determines one or more I/O user devices that satisfy a criterion for having a probability which satisfies a probability threshold for becoming within a threshold proximity range of the user within a threshold time. The machine learning model 252 provides 1014 a prediction response to the IODH 212, which in the example of Figure 10 indicates that a second I/O user device (IOD#2) satisfies the criterion. The prediction response can identify a list of any I/O user devices which satisfy the determinations by the machine learning model 252.

The IODH 212 decides 1016 whether to associate the second I/O user device (IOD#2) with the user terminal emulator 110 based on the prediction response and a determination (e.g., 1206 in Fig. 12) whether the second I/O user device (IOD#2) has an I/O user interface that satisfies a capability criterion to enable the user to use a communication service through the network entity 150. When the IODH 212 decides 1016 to associate the second I/O user device (IOD#2) with the user terminal emulator 110, the IODH 212 signals 1018 (e.g., 1208 in Fig. 12) the second I/O user device (IOD#2) to prepare for using the I/O user interface to provide the communication service for the user through the network entity 150, and can further send 1020 a notification to the user terminal emulator 110 indicating that the second I/O user device (IOD#2) is available or may soon become available to provide a communication service for the user. In this manner, the user terminal emulator 110 is made aware that the second I/O user device (IOD#2) can be used to set up a communication service with the user or to hand off an ongoing communication service involving the user, such as from using the first I/O user device (IOD#1) to instead using the second I/O user device (IOD#2). For example, an audio and/or video stream that was being routed to the first I/O user device (IOD#1) may then be additionally or alternatively routed to the second I/O user device (IOD#2), such as responsive to the first I/O user device (IOD#1) ceasing to detect the presence of the UserTag, e.g., for at least a threshold time and/or responsive to the second I/O user device (IOD#2) detecting new presence of the UserTag.

In some embodiments, various I/O user devices may be configured to communicate directly with one another to perform for the user terminal emulation server 100. For example, the IODH 212 may signal 1018 (e.g., 1208 in Fig. 12) the first I/O user device (IOD#1) to trigger the first I/O user device (IOD#1) to, in turn, signal the second I/O user device (IOD#2) to prepare for using the I/O user interface of the second I/O user device (IOD#2) to provide the communication service for the user. Alternatively or additionally, the first and second I/O user devices may communicate between them to coordinate hand off between then for providing an I/O user interface for the user for an ongoing communication service.

### Predict User Proximity and Prepare Routing Traffic of a Communication Service to I/O User Device

Further operations are now described for predicting that an I/O user device will become proximately located to a user and responsively controlling routing of a traffic for an ongoing communication service to the I/O user interface, in accordance with some embodiments.

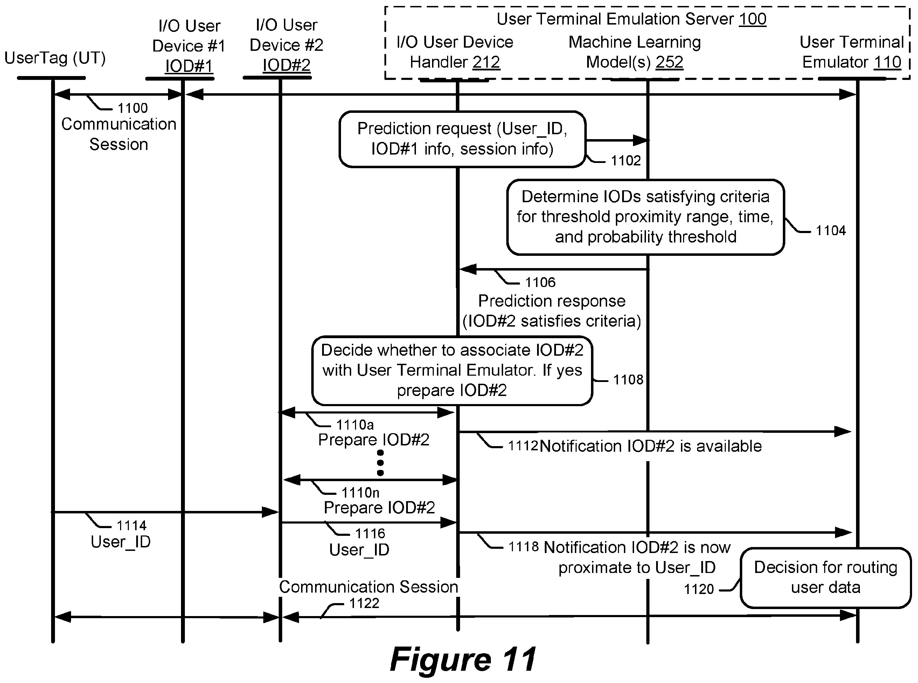

Figure 11 illustrates a combined flowchart of operations and related data flows between a UserTag, I/O user devices, and the user terminal emulation server 100 in accordance with some embodiments of the present disclosure.

Referring to Figure 11, a user associated with the UserTag is using a first I/O user device (IOD#1) or group of IODs (collectively referred to as IOD#1) for a communication session 1100 established to transport traffic of an ongoing communication service provided through the user terminal emulation server 100 and the network entity 150 of, e.g., Fig. 1. The user terminal emulation server 100 and, more particularly, the IODH 212 sends 1102 a prediction request containing at least part of IOD data, such as the user identifier and an indication that the first I/O user device (IOD#1) is presently proximately located to the user.

In some embodiments, the prediction request is provided to the machine learning model 252, which predicts 1104 (also 1204 in Fig. 12) which, if any, other I/O user device(s) will become proximately located to the user based on content of the received prediction request. In one embodiment, the machine learning model 252 determines one or more I/O user devices that satisfy a criterion for having a probability which satisfies a probability threshold for becoming within a threshold proximity range of the user within a threshold time. The machine learning model 252 provides 1106 a prediction response to the IODH 212, which in the example of Figure 11 indicates that a second I/O user device (IOD#2) satisfies the criteria. The prediction response can identify a list of any I/O user devices which satisfy the determinations by the machine learning model 252.

The IODH 212 decides 1108 whether to associate the second I/O user device (IOD#2) with the user terminal emulator 110 based on the prediction response and a determination (e.g., 1206 in Fig. 12) whether the second I/O user device (IOD#2) has an I/O user interface that satisfies a capability criterion to enable the user to use the ongoing communication service through the network entity 150. When the IODH 212 decides 1108 to associate the second I/O user device (IOD#2) with the user terminal emulator 110, the IODH 212 may repetitively signal 1110a-1110n (e.g., 1208 in Fig. 12) the second I/O user device (IOD#2) to prepare for using the I/O user interface to serve as a user interface for at least some of the traffic of the ongoing communication session 1100. The repetitive signaling 1110a-1110n may serve to query the second I/O user device (IOD#2) whether the user has become proximately located, to wake up the second I/O user device (IOD#2) for identifying when the user has become proximately located, for paging the second I/O user device (IOD#2), and/or to enable faster establishment of a communication session with the IODH 212 when handoff of the communication services is to be performed to the second I/O user device (IOD#2).

The IODH 212 may further send 1112 a notification to the user terminal emulator 110 indicating that the second I/O user device (IOD#2) is available or may soon become available to provide the communication service of the communication session 1100 for the user. In this manner, the user terminal emulator 110 is made aware that the second I/O user device (IOD#2) can be used for hand off of the ongoing communication service involving the user, such as by routing traffic for the communication service to the second I/O user device (IOD#2) and ceasing routing of the traffic the first I/O user device (IOD#1). For example, an audio and/or video stream that was being routed to the first I/O user device (IOD#1) may then be additionally or alternatively routed to the second I/O user device (IOD#2), such as responsive to the first I/O user device (IOD#1) ceasing to detect the presence of the UserTag, e.g., for at least a threshold time and/or responsive to the second I/O user device (IOD#2) detecting new presence of the UserTag.

As further illustrated in the example scenario of Figure 11, the second I/O user device (IOD#2) detects 1114 presence of the UserTag and receives the IOD data which can include the user ID and preferences as described above. The second I/O user device (IOD#2) sends 1116 the IOD data (e.g., user ID) to the IODH 212 which can provide 1118 a notification to the user terminal emulator 110 that the second I/O user device (IOD#2) is now proximately located to the user (e.g., user ID). The user terminal emulator 110 responsively decides 1120 to route traffic (user data) for the ongoing communication service to the second I/O user device (IOD#2) by, for example, establishing a communication session with the second I/O user device (IOD#2).

### Operations for Signalling an I/O User Device to Prepare for a Communication Service

In some embodiments, the operation for signaling (e.g., 1208 in Fig. 12, 1018 in Fig. 10, 1110a-n in Fig. 11) an I/O user device (e.g., second I/O user device (IOD#2)) to prepare for using its I/O user interface to provide a communication service for the user, includes sending (e.g., 1018 in Fig. 10, 1110a-n in Fig. 11) a message configured to trigger the I/O user device to report to the user terminal emulation server 100 when the user has become proximately located.

As illustrated in the operational scenario of Figure 11, the signaling (e.g., 1208 in Fig. 12, 1018 in Fig. 10, 1110a-n in Fig. 11) can include repetitively sending (1110a-n) the message, and adjusting a rate at which the message is repetitively sent based on at least one of: a determined probability that the I/O user device will become proximately located to the user; and a prediction of when the I/O user device will become proximately located to the user.

In some other embodiments, the user terminal emulation server 100 starts routing traffic for communication service to an I/O user device before the user is predicted to become proximately located to the I/O user device. In one example embodiment, operations for signaling (1208 in Fig. 12, 1018 in Fig. 10, 1110a-n in Fig. 11) the I/O user device to prepare for using the I/O user interface to provide a communication service for the user through the network entity 150, includes initiating routing of communication traffic of the communication service to the I/O user device before the user is predicted to become proximately located to the I/O user device. The I/O user device is configured to perform one of the following with the communication traffic: initiate playout (e.g., audio output through speaker, video output through video display, etc.) of the communication traffic through the I/O user interface; buffer the communication traffic for subsequent playout through the I/O user interface responsive to the user becoming proximately located to the I/O user device; and discard the communication traffic until the user becomes proximately located to the I/O user device.

Preparation of the I/O user device responsive to the signaling can include establishing a communication session with I/O user device which connects the I/O user device to the user terminal emulation server 100 before the user is predicted to become proximately located to the I/O user device. In some embodiments, traffic for the communication session may not start to be routed to the I/O user device until the user's proximity, e.g., userTag, is reported. In one example embodiment, the user terminal emulation server 100, e.g., user terminal emulator 110 and/or the IODH 212, establishes a communication session with the I/O user device (e.g., second I/O user device (IOD#2)) which connects the I/O user device to the user terminal emulation server 100 before the user is predicted to become proximately located to the I/O user device. Responsive to determining that the user has become proximately located to the I/O user device, the user terminal emulation server 100 initiates routing of communication traffic of the communication service through the communication session established with the I/O user device (e.g., second I/O user device (IOD#2)) and ceases routing of the communication traffic of the communication service through another communication session established with a previously proximate I/O user device (e.g., first I/O user device (IOD#1)) that is no longer proximately located to the user.

The signaling to prepare the I/O user device may contain configuration and/or setup information that is used by the I/O user device to become operationally ready for using its I/O user interface to provide the communication service for the user. For example, in one embodiment the signaling (1208 in Fig. 12, 1018 in Fig. 10, 1110a-n in Fig. 11) includes communicating 1018 device configuration data to the I/O user device which configures the I/O user device for using the I/O user interface to provide the first communication service. In a further embodiment, the device configuration data communicated to the I/O user device is adapted to configure at least one of the following operations of the I/O user device:
**1)** relative durations of a sleep cycle and an awake cycle of the I/O user device, wherein during the sleep cycle the I/O user device is not capable of providing the UI capability to the user (e.g., the user interface is not operational for use by the user) and during the awake cycle the I/O user device is capable of providing the UI capability to the user (e.g., the user interface is operational for use by the user);
**2)** a paging procedure of the I/O user device;
**3)** a frame rate of video to be streamed from a camera of the I/O user device toward the network entity 150 when the first communication service is provided through the I/O user device;
**4)** a resolution of video to be streamed from the camera of the I/O user device toward the network entity 150 when the first communication service is provided through the I/O user device;
**5)** a coding format of video to be streamed from the camera of the I/O user device toward the network entity 150 when the first communication service is provided through the I/O user device;
**6)** a coding format of audio to be streamed from a microphone of the I/O user device toward the network entity 150 when the first communication service is provided through the I/O user device;
**7)** a frame rate of video to be displayed by a display screen of the I/O user device toward the network entity 150 when a video stream is received from the network entity 150 for the first communication service;
**8)** a resolution of video to be displayed by a display screen of the I/O user device when a video stream is received from the network entity 150 for the first communication service; and
**9)** user input interface key assignments used to translate user input via the user input interface into user inputted data which will be sent toward the network entity 150 when the first communication service is provided through the I/O user device.

### Using Machine Learning Model to Predict Proximity of User to I/O User Device

Various ways that the machine learning model 252 can be trained and used to predict proximity of a user to one or more I/O user devices are now explained.

In some embodiments, the machine learning model 252 includes a decentralized federated learning architecture with hierarchical associations between layers of machine learning models. A layer of local machine learning models process and are trained to track information indicating users' habits for using communication services (e.g., which I/O user devices the users usually use as a function of various types of communication services, as a function of time of day and/or day of week, as a function of how many people and/or which particular people are participating in the communication service). As the local machine learning models are updated based on observed user activity, model parameters are also transmitted to a higher level machine learning model which may reside in the IODH 212 which has been trained with knowledge about the relative locations of the I/O user devices and the associated local machine learning models that more locally monitor I/O user device usage. Each of the models may be configured as a Deep Neural Network (DNN) or Convolutional Neural Network (CNN).

The division of responsibility between the hierarchical layers of models can be configured according to geographic constraints, e.g., so that "sub IODHs" have access to process information relating to only a city constrained list of locations of I/O user devices, and are trained based on user usage of the I/O user devices within that city. That city-based model can be then in-turn be connected to a higher level "municipality model" which encompasses the plurality of cities or directly to a "country model" which encompasses a plurality of municipalities, and so on. The architectural layout of the hierarchical machine learning models may be manually setup by one or more model owners and/or can be dynamically self-configured depending on the number of users, number of I/O user devices, observed patterns of mobility between the I/O user devices, etc. City, municipality, etc. are non-limiting examples and any grouping of I/O user devices to machine learning models can be used. The grouping may be based on data rates (number of I/O user devices communicating with the IODH 212, etc.), number of users, and/or local/regional regulatory borders.

Associations between I/O user devices and individual ones of the machine learning models may be remapped over time to reflect changes in location of the I/O user devices, such as when some of I/O user devices are not geographically fixed but instead mobile.

A repository database 120 (e.g., Fig. 1) containing locations and UI capabilities of I/O user devices may be organized in a data structure similar to a look-up-table that is continuously updated with new locations of I/O user devices. Alternatively, an improved approach may use a network model database or hierarchical model that is built up by the IODH 212 when new I/O user devices are being added. This makes the repository database 120 better at handling multiple access at the same time, since the lookup will start the traverse from the datapoints around it (geography-wise) and then search from there, until the search criteria has been met.

The machine learning model 252 can be trained based on time ordered sequences of I/O user devices which have been historically observed to sequentially become proximate to users, e.g., first I/O user device near doorway detects proximity with users, then second I/O user device further down a hallway detects proximity with some or all of those users, then a third I/O user device further down the hallway detects proximity with some or all of those users, then a fourth I/O user device in a main conference room further down the hallway detects proximity with some or all of those users, etc. In one embodiment, the operation predicting (1204, 1008, 1012, 1102, 1104) that the I/O user device will become proximately located to the user, includes processing (1012, 1104) information indicating present proximity of the user to another I/O user device through the machine learning model 252 that has been trained based on time ordered sequences of I/O user devices that have been historically observed to become proximately located to users, and predicting (1012, 1016, 1104, 1108) that the I/O user device will become proximately located to the user based on output of the machine learning model 252 from processing the information.

The rate at which a message is repetitively sent for the signaling (1208, 1018, 1110a-n) to prepare an I/O user device, can be adjusted based on output of the machine learning model 252 indicating probability the user will be proximately located to the I/O user device. In one embodiment, the operations repetitively send (1110a-1110n) a message configured to trigger the I/O user device to prepare the I/O user device for using the I/O user interface to provide the first communication service for the user. The operations process (1012, 1104) information indicating present proximity of the user to another I/O user device through the machine learning model 252 that has been trained based on time ordered sequences of I/O user devices identified in the repository that have been historically observed to become proximately located to users, to output an indicated probability that the user will be proximately located to the I/O user device. The operations then adjust a rate at which the message is repetitively sent based on the indicated probability.

The machine learning model 252 may be trained based on historical observations of which users have been proximately located to which I/O user devices as a function of time and date. In one embodiment, the operations to predict that the I/O user device will become proximately located to the user, include processing (1012, 1104) a time of day and date (where "date" can be the day of week, day of month, or day of year) through the machine learning model 252 that has been trained based on historically observed proximity between identified users and identified I/O user devices at identified times and dates, to output probability predictions of which of the identified users are predicted to become proximately located to identified I/O user devices. The operations then predict (1012, 1016, 1104, 1108) whether the I/O user device will become proximately located to the user based on an identity of the user and the probability predictions output by the machine learning model 252.

The machine learning model 252 may be trained based on geographic locations of the I/O user devices, so a user's present geographic location can generate a prediction of which, if any, I/O user devices are likely to become proximately located to the user. In one embodiment, the operations to predict that the I/O user device will become proximately located to the user, include processing (1012, 1104) a present geographic location of the user through the machine learning model 252 that has been trained based on geographic locations of the I/O user devices. The operations then predict (1012, 1016, 1104, 1108) whether the I/O user device will become proximately located to the user based on an output of the machine learning model 252 from processing the present geographic location of the user.

The machine learning model 252 may be trained based on capabilities of I/O user devices which are required to satisfy defined types of communication services. One embodiment, the operations to determine that the I/O user interface of the I/O user device satisfies the capability criterion, include processing (1012, 1104) a user interface capability of the I/O user interface of the I/O user device and an indication of the first one of the communication services through the machine learning model 252 that has been trained based on user interface capabilities that are required to satisfy different types of communication services. The operations then determine (1012, 1016, 1104, 1108) whether the capability criterion is satisfied based on an output of the machine learning model 252 from processing the user interface capability of the I/O user interface and the indication of the first one of the communication services.

The machine learning model 252 may be trained based on sets of I/O user devices which have been historically selected by users when using a communication service. In one embodiment, the operations process (1204, 1012, 1104) a predicted next location of the user through the machine learning model 252 that has been trained based on historically observed sets of the I/O user devices that have been selected for use by users who were proximately located to the next location when using a communication service, to output candidate sets of the I/O user devices. The operations then select (1016, 1108) a first set of the I/O user devices, from among the candidate sets of the I/O user devices, which have a set of I/O user interfaces that satisfy the capability criterion to enable the user to use the first one of the communication services. Before the user is predicted to become proximately located to the first set of the I/O user devices, the operations signal (1208, 1018, 1110a-n) the first set of the I/O user devices to prepare for using the set of I/O user interfaces to provide the first communication service for the user through the network entity 150.

In some embodiments, input data is processed through machine learning model 252 at a defined frequency returning a set of I/O user devices that is predicted to become proximately located to one or more users. Reinforced training of the machine learning model 252 over time can include using feedback indicating which of the I/O user devices listed in the set were chosen and/or not chosen by the IODH 212 and/or by a user(s) as an interface for one or more communication services. Machine learning model parameters which have been updated through the training can be provided to one or more higher level machine learning models in a hierarchical set of machine learning models, such as described above (e.g., small geographical area layer of machine learning models, connected higher layer of machine learning models for larger geographic regions, etc.).

### Selecting Sets of I/O User Devices for Use in a Communication Service

As was described above, the user terminal emulation server 100 can select a set of the I/O user devices, from among candidate sets of the I/O user devices, which have a set of I/O user interfaces that satisfy a capability criterion to enable the user to use one of the communication services. Before the user is predicted to become proximately located to the set of the I/O user devices, the user terminal emulation server 100 can signal the set of the I/O user devices to prepare for using the set of I/O user interfaces to provide the communication service for the user through the network entity 150.

An example of a set of the I/O user devices includes operationally coupling to the user terminal emulator 110 a big screen TV, which lacks a microphone, with a nearby smart speaker that has a microphone operable to record user commands. Together, the set of the I/O user devices satisfies the requirements of a single video conference communication device. Another example includes a set of TV screens spaced apart along a building corridor, which are sequentially prepared for use and then used to provide a communication service to a user as the user walks along the building corridor becoming proximately located to individual ones of the TV screens one-at-a-time.

Which I/O user devices are selected for inclusion in a set can also be based on how many people and/or which particular people are participating in a communication service, such as to prepare a headset speaker for use by a single local user participant or a loudspeaker for use by a plurality of local user participants. The selection may also be influenced by time of day and/or date which affects known availability of particular ones of the I/O user devices for use in providing a communication service.

A wide range of sensors may be used selectively included as part of a set of I/O user devices to be prepared for a communication service. For example, led lights and environmental sensors (temp or ventilation, etc.) may also be selected among for inclusion in the set to, for example, enable adjustment of room lighting and/or temperature in preparation for a user participating in a communication service from within the room.

### Cloud Implementation

Some or all operations described above as being performed by the user terminal emulation server 100 or the I/O user devices 130 may alternatively be performed by the other one, and/or by another node that is part of a cloud computing resource. For example, those operations can be performed as a network function that is close to the edge, such as in a cloud server or a cloud resource of a telecommunications network operator, e.g., in a CloudRAN or a core network, and/or may be performed by a cloud server or a cloud resource of a media provider, e.g., iTunes service provider or Spotify service provider.

### Example I/O User Device and User Terminal Emulation Server

Figure 8 is a block diagram of components of an I/O user device 130 which are configured to operate in accordance with some embodiments. The I/O user device 130 can include a wired/wireless network interface circuit 902, a near field communication circuit 920, at least one processor circuit 900 (processor), and at least one memory circuit 910 (memory). The processor 900 is connected to communicate with the other components. The memory 910 stores program code 912 that is executed by the processor 900 to perform operations disclosed herein. The processor 900 may include one or more data processing circuits (e.g., microprocessor and/or digital signal processor), which may be collocated or distributed across one or more data networks. The processor 900 is configured to execute the program code 912 in the memory 910, described below as a computer readable medium, to perform some or all of the operations and methods for one or more of the embodiments disclosed herein for a mobile electronic device. The I/O user device 130 can include one or more UI devices, including without limitation, a microphone 940, a speaker 950, a camera 930, and display device 960, and a user input interface 970.

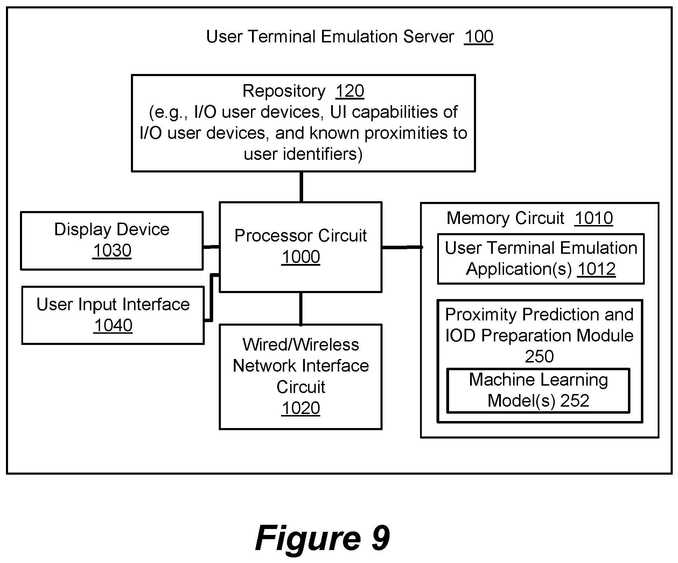

Figure 9 is a block diagram of components of a user terminal emulation server 100 which are configured to operate in accordance with some embodiments. The user terminal emulation server 100 can include a wired/wireless network interface circuit 1020, a repository 120 (e.g., listing I/O user devices, UI capabilities of the I/O user devices, known proximities to user identifiers, etc.), a display device 1030, a user input interface 1040 (e.g., keyboard or touch sensitive display), at least one processor circuit 1000 (processor), and at least one memory circuit 1010 (memory). The processor 1000 is connected to communicate with the other components. The memory 1010 stores user terminal emulation application 1012 that is executed by the processor 1000 to perform operations disclosed herein. The memory 1010 also stores a proximity prediction and I/O user device (IOD) preparation module 250. In some embodiments, the module 250 includes a machine learning model 252. The processor 1000 may include one or more data processing circuits (e.g., microprocessor and/or digital signal processor), which may be collocated or distributed across one or more data networks. The processor 1000 is configured to execute computer program instructions in the memory 1010, described below as a computer readable medium, to perform some or all of the operations and methods for one or more of the embodiments disclosed herein for a mobile electronic device.

### Abbreviations:

- 3GPP: 3rd Generation Partnership Project'
- App: Application, i.e. program
- CNN: Convolutional Neural Network
- DNN: Deep Neural Network
- DRX: Discontinuous Reception
- eNB: Evolved Node B (a.k.a. RBS, Radio Base Station)
- GNSS: Global Navigation Satellite System
- GPS: Global Positioning System
- GW: Gateway
- ICMP: Internet Control Message Protocol
- IOD: Input Output Device
- IODH: Input Output Device Handler
- ITU: International Telecommunication Union
- RRC: Radio Resource Control
- RTP: Real Time Protocol
- RTCP: Real Time Control Protocol
- NTP: Network Time Protocol
- SDP: Session Description Protocol
- UE: User equipment

### Further Definitions and Embodiments:

In the above description of various embodiments of present inventive concepts, it is to be understood that the terminology used herein is for the purpose of describing particular embodiments only and is not intended to be limiting of present inventive concepts. Unless otherwise defined, all terms (including technical and scientific terms) used herein have the same meaning as commonly understood by one of ordinary skill in the art to which present inventive concepts belongs. It will be further understood that terms, such as those defined in commonly used dictionaries, should be interpreted as having a meaning that is consistent with their meaning in the context of this specification and the relevant art and will not be interpreted in an idealized or overly formal sense expressly so defined herein.

When an element is referred to as being "connected", "coupled", "responsive", or variants thereof to another element, it can be directly connected, coupled, or responsive to the other element or intervening elements may be present. In contrast, when an element is referred to as being "directly connected", "directly coupled", "directly responsive", or variants thereof to another element, there are no intervening elements present. Like numbers refer to like elements throughout. Furthermore, "coupled", "connected", "responsive", or variants thereof as used herein may include wirelessly coupled, connected, or responsive. As used herein, the singular forms "a", "an" and "the" are intended to include the plural forms as well, unless the context clearly indicates otherwise. Well-known functions or constructions may not be described in detail for brevity and/or clarity. The term "and/or" includes any and all combinations of one or more of the associated listed items.

It will be understood that although the terms first, second, third, etc. may be used herein to describe various elements/operations, these elements/operations should not be limited by these terms. These terms are only used to distinguish one element/operation from another element/operation. Thus, a first element/operation in some embodiments could be termed a second element/operation in other embodiments without departing from the teachings of present inventive concepts. The same reference numerals or the same reference designators denote the same or similar elements throughout the specification.

As used herein, the terms "comprise", "comprising", "comprises", "include", "including", "includes", "have", "has", "having", or variants thereof are open-ended, and include one or more stated features, integers, elements, steps, components or functions but does not preclude the presence or addition of one or more other features, integers, elements, steps, components, functions or groups thereof. Furthermore, as used herein, the common abbreviation "e.g.", which derives from the Latin phrase "exempli gratia," may be used to introduce or specify a general example or examples of a previously mentioned item, and is not intended to be limiting of such item. The common abbreviation "i.e.", which derives from the Latin phrase "id est," may be used to specify a particular item from a more general recitation.

Example embodiments are described herein with reference to block diagrams and/or flowchart illustrations of computer-implemented methods, apparatus (systems and/or devices) and/or computer program products. It is understood that a block of the block diagrams and/or flowchart illustrations, and combinations of blocks in the block diagrams and/or flowchart illustrations, can be implemented by computer program instructions that are performed by one or more computer circuits. These computer program instructions may be provided to a processor circuit of a general purpose computer circuit, special purpose computer circuit, and/or other programmable data processing circuit to produce a machine, such that the instructions, which execute via the processor of the computer and/or other programmable data processing apparatus, transform and control transistors, values stored in memory locations, and other hardware components within such circuitry to implement the functions/acts specified in the block diagrams and/or flowchart block or blocks, and thereby create means (functionality) and/or structure for implementing the functions/acts specified in the block diagrams and/or flowchart block(s).

These computer program instructions may also be stored in a tangible computer-readable medium that can direct a computer or other programmable data processing apparatus to function in a particular manner, such that the instructions stored in the computer-readable medium produce an article of manufacture including instructions which implement the functions/acts specified in the block diagrams and/or flowchart block or blocks. Accordingly, embodiments of present inventive concepts may be embodied in hardware and/or in software (including firmware, resident software, micro-code, etc.) that runs on a processor such as a digital signal processor, which may collectively be referred to as "circuitry," "a module" or variants thereof.

It should also be noted that in some alternate implementations, the functions/acts noted in the blocks may occur out of the order noted in the flowcharts. For example, two blocks shown in succession may in fact be executed substantially concurrently or the blocks may sometimes be executed in the reverse order, depending upon the functionality/acts involved. Moreover, the functionality of a given block of the flowcharts and/or block diagrams may be separated into multiple blocks and/or the functionality of two or more blocks of the flowcharts and/or block diagrams may be at least partially integrated. Finally, other blocks may be added/inserted between the blocks that are illustrated, and/or blocks/operations may be omitted without departing from the scope of inventive concepts. Moreover, although some of the diagrams include arrows on communication paths to show a primary direction of communication, it is to be understood that communication may occur in the opposite direction to the depicted arrows.

Many variations and modifications can be made to the embodiments as long as they are encompassed within the scope of the invention as defined by the appended claims. Accordingly, the above disclosed subject matter is to be considered illustrative, and not restrictive, and the appended examples of embodiments are intended to cover all such modifications, enhancements, and other embodiments, which fall within the scope of the invention as defin ed by the appended claims.

## Claims

1. A user terminal emulation server (100) for providing communication services through one or more input and/or output, I/O, user devices to a user, wherein the user terminal emulation server (100) is configured to:
register the user with a network entity (150) providing the communication services;
predict that an I/O user device will become proximately located to the user; and
based on the prediction that the I/O user device will become proximately located to the user,
determine that the I/O user device has an I/O user interface that satisfies a capability criterion to enable the user to use a first one of the communication services, the user terminal emulation server being **characterized in that** it is further configured,
based on the satisfaction of the capability criterion and before the user is predicted to become proximately located to the I/O user device, to signal the I/O user device to prepare for using the I/O user interface to provide the first communication service for the user through the network entity (150)
wherein to signal the I/O user device to prepare for using the I/O user interface to provide the first communication service for the user through the network entity (150), the user terminal emulation server (100) is configured to:
send a message configured to trigger the I/O user device to report to the user terminal emulation server (100) when the user has become proximately located.

2. The user terminal emulation server (100) of Claim 1, further configured to:
repetitively send the message; and
to adjust a rate at which the message is repetitively sent based on at least one of: a determined probability that the I/O user device will become proximately located to the user; and a prediction of when the I/O user device will become proximately located to the user.

3. The user terminal emulation server (100) of Claim 1 or 2, wherein to signal the I/O user device to prepare for using the I/O user interface to provide the first communication service for the user through the network entity (150), the user terminal emulation server (100) is configured to:
initiate routing of communication traffic of the first communication service to the I/O user device before the user is predicted to become proximately located to the I/O user device, wherein the I/O user device performs one of the following with the communication traffic: initiate playout of the communication traffic through the I/O user interface; buffer the communication traffic for subsequent playout through the I/O user interface responsive to the user becoming proximately located to the I/O user device; and discard the communication traffic until the user becomes proximately located to the I/O user device.

4. The user terminal emulation server (100) of any of Claims 1 to 3, further configured to:
establish a communication session with the I/O user device which connects the I/O user device to the user terminal emulation server (100) before the user is predicted to become proximately located to the I/O user device; and
responsive to determining that the user has become proximately located to the I/O user device, initiate routing of communication traffic of the first communication service through the communication session established with the I/O user device and cease routing of the communication traffic of the first communication service through another communication session established with a previously proximate I/O user device that is no longer proximately located to the user.

5. The user terminal emulation server (100) of any of Claims 1 to 4, wherein to signal the I/O user device to prepare for using the I/O user interface to provide the first communication service for the user through the network entity (150), the user terminal emulation server (100) is configured to:
communicate device configuration data to the I/O user device which configures the I/O user device for using the I/O user interface to provide the first communication service.

6. The user terminal emulation server (100) of Claim 5, wherein:
the device configuration data communicated to the I/O user device is adapted to configure at least one of the following operations of the I/O user device:
relative durations of a sleep cycle and an awake cycle, wherein during the sleep cycle the I/O user device is not capable of providing the UI capability to the user and during the awake cycle the I/O user device is capable of providing the UI capability to the user;
a paging procedure of the I/O user device;
a frame rate of video to be streamed from a camera of the I/O user device toward the network entity (150) when the first communication service is provided through the I/O user device;
a resolution of video to be streamed from the camera of the I/O user device toward the network entity (150) when the first communication service is provided through the I/O user device;
a coding format of video to be streamed from the camera of the I/O user device toward the network entity (150) when the first communication service is provided through the I/O user device;
a coding format of audio to be streamed from a microphone of the I/O user device toward the network entity (150) when the first communication service is provided through the I/O user device;
a frame rate of video to be displayed by a display screen of the I/O user device toward the network entity (150) when a video stream is received from the network entity (150) for the first communication service;
a resolution of video to be displayed by a display screen of the I/O user device when a video stream is received from the network entity (150) for the first communication service; and
user input interface key assignments used to translate user input via the user input interface into user inputted data which will be sent toward the network entity (150) when the first communication service is provided through the I/O user device.

7. The user terminal emulation server (100) of any of Claims 1 to 6, wherein to predict that the I/O user device will become proximately located to the user, the user terminal emulation server (100) is configured to:
process information indicating present proximity of the user to another I/O user device through a machine learning model (252) that has been trained based on time ordered sequences of I/O user devices that have been historically observed to become proximately located to users; and
predict that the I/O user device will become proximately located to the user based on output of the machine learning model from processing the information.

8. The user terminal emulation server (100) of Claim 7, further configured to:
train the machine learning model (252) based on the time ordered sequences of I/O user devices that have been historically observed to become proximately located to users.

9. The user terminal emulation server (100) of any of Claims 1 to 8, further configured to:
repetitively send a message configured to trigger the I/O user device to prepare the I/O user device for using the I/O user interface to provide the first communication service for the user;
process information indicating present proximity of the user to another I/O user device through a machine learning model (252) that has been trained based on time ordered sequences of I/O user devices among the I/O user devices identified in the repository that have been historically observed to become proximately located to users, to output an indicated probability that the user will be proximately located to the I/O user device; and
adjust a rate at which the message is repetitively sent based on the indicated probability.

10. The user terminal emulation server (100) of any of Claims 1 to 9, wherein to predict that the I/O user device will become proximately located to the user, the user terminal emulation server (100) is configured to:
process a time of day and date through a machine learning model (252) that has been trained based on historically observed proximity between identified users and identified I/O user devices at identified times and dates, to output probability predictions of which of the identified users are predicted to become proximately located to identified I/O user devices; and
predict whether the I/O user device will become proximately located to the user based on an identity of the user and the probability predictions output by the machine learning model (252).

11. The user terminal emulation server (100) of any of Claims 1 to 10, wherein to predict that the I/O user device will become proximately located to the user, the user terminal emulation server (100) is configured to:
process a present geographic location of the user through a machine learning model (252) that has been trained based on geographic locations of the I/O user devices; and
predict whether the I/O user device will become proximately located to the user based on an output of the machine learning model (252) from processing the present geographic location of the user.

12. The user terminal emulation server (100) of any of Claims 1 to 11, wherein to determine that the I/O user interface of the I/O user device satisfies the capability criterion, the user terminal emulation server (100) is configured to:
process a user interface capability of the I/O user interface of the I/O user device and an indication of the first one of the communication services through a machine learning model (252) that has been trained based on user interface capabilities that are required to satisfy different types of communication services; and
determine whether the capability criterion is satisfied based on an output of the machine learning model (252) from processing the user interface capability of the I/O user interface and the indication of the first one of the communication services.

13. The user terminal emulation server (100) of any of Claims 1 to 12, further configured to:
process a predicted next location of the user through a machine learning model (252) that has been trained based on historically observed sets of the I/O user devices that have been selected for use by users who were proximately located to the next location when using the communication service, to output candidate sets of the I/O user devices;
select a first set of the I/O user devices, from among the candidate sets of the I/O user devices, which have a set of I/O user interfaces that satisfy the capability criterion to enable the user to use the first one of the communication services; and
before the user is predicted to become proximately located to the first set of the I/O user devices, signal the first set of the I/O user devices to prepare for using the set of I/O user interfaces to provide the first communication service for the user through the network entity (150).

14. A method for providing communication services through one or more input and/or output, I/O, user devices to a user, the method comprising:
registering (1202) the user with a network entity providing the communication services;
predicting (1204, 1008, 1012, 1102, 1104) that an I/O user device will become proximately located to the user; and
based on the prediction that the I/O user device will become proximately located to the user,
determining (1206, 1016, 1108) that the I/O user device has an I/O user interface that satisfies a capability criterion to enable the user to use a first one of the communication services, the method being **characterized in that** it further comprises,
based on the satisfaction of the capability criterion and before the user is predicted to become proximately located to the I/O user device, signaling (1208, 1018, 1110a-n) the I/O user device to prepare for using the I/O user interface to provide the first communication service for the user through the network entity (150),
wherein the signaling (1208, 1018, 1110a-n) the I/O user device to prepare for using the I/O user interface to provide the first communication service for the user through the network entity (150) comprises:
sending (1018, 1110a-n) a message configured to trigger the I/O user device to report to the user terminal emulation server (100) when the user has become proximately located.

15. A computer program product comprising:
a non-transitory computer readable medium storing program instructions executable by at least one processor of a user terminal emulation server for providing communication services through one or more input and/or output, I/O, user devices to a user, through operations comprising:
registering the user with a network entity providing the communication services;
predicting that an I/O user device will become proximately located to the user; and
based on the prediction that the I/O user device will become proximately located to the user,
determining that the I/O user device has an I/O user interface that satisfies a capability criterion to enable the user to use a first one of the communication services, the computer program product being **characterized in that** the operations further comprise:
based on the satisfaction of the capability criterion and before the user is predicted to become proximately located to the I/O user device, signaling the I/O user device to prepare for using the I/O user interface to provide the first communication service for the user through the network entity,
wherein the signaling (1208, 1018, 1110a-n) the I/O user device to prepare for using the I/O user interface to provide the first communication service for the user through the network entity (150) comprises:
sending (1018, 1110a-n) a message configured to trigger the I/O user device to report to the user terminal emulation server (100) when the user has become proximately located.

## Patentansprüche

1. Benutzerendgeräte-Emulationsserver (100) zum Bereitstellen eines Kommunikationsdienstes über eine oder mehrere Eingabe- und/oder Ausgabe-Benutzervorrichtungen, E/A-Benutzervorrichtungen, für einen Benutzer, wobei der Benutzerendgeräte-Emulationsserver (100) zu Folgendem konfiguriert ist:
Anmelden des Benutzers bei einer Netzwerkentität (150), die Kommunikationsdienste bereitstellt;
Vorhersagen, dass sich eine E/A-Benutzervorrichtung in der Nähe des Benutzers befinden wird; und
basierend auf der Vorhersage, dass sich die E/A-Benutzervorrichtung in der Nähe des Benutzers befinden wird,
Bestimmen, dass die E/A-Benutzervorrichtung eine E/A-Benutzerschnittstelle aufweist, die ein Fähigkeitskriterium erfüllt, um den Benutzer zum Verwenden eines ersten der Kommunikationsdienste zu befähigen, wobei der Benutzerendgeräte-Emulationsserver **dadurch gekennzeichnet ist, dass** er ferner dazu konfiguriert ist,
basierend auf der Erfüllung des Fähigkeitskriteriums und vor der Vorhersage, dass sich der Benutzer in der Nähe der E/A-Benutzervorrichtung befinden wird, der E/A-Benutzervorrichtung zu signalisieren, sich zur Verwendung der E/A-Schnittstelle zum Bereitstellen des ersten Kommunikationsdiensts für den Benutzer über die Netzwerkentität (150) vorzubereiten,
wobei, um der E/A-Benutzervorrichtung zu signalisieren, sich zur Verwendung der E/A-Schnittstelle zum Bereitstellen des ersten Kommunikationsdiensts für den Benutzer über die Netzwerkentität (150) vorzubereiten, der Benutzerendgeräte-Emulationsserver (100) zu Folgendem konfiguriert ist:
Senden einer Nachricht, die dazu konfiguriert ist, die E/A-Benutzervorrichtung auszulösen, um dem Benutzerendgeräte-Emulationsserver (100) zu melden, wenn sich der Benutzer in der Nähe befindet.

2. Benutzerendgeräte-Emulationsserver (100) nach Anspruch 1, der ferner zu Folgendem konfiguriert ist:
wiederholtes Senden der Nachricht; und
Anpassen einer Rate, mit der die Nachricht wiederholt gesendet wird, basierend auf mindestens einem von Folgenden: einer bestimmten Wahrscheinlichkeit, dass sich die E/A-Benutzervorrichtung in der Nähe des Benutzers befinden wird; und einer Vorhersage dessen, wann sich die E/A-Benutzervorrichtung in der Nähe des Benutzers befinden wird.

3. Benutzerendgeräte-Emulationsserver (100) nach Anspruch 1 oder 2, wobei, um der E/A-Benutzervorrichtung zu signalisieren, sich zur Verwendung der E/A-Schnittstelle zum Bereitstellen des ersten Kommunikationsdiensts für den Benutzer über die Netzwerkentität (150) vorzubereiten, der Benutzerendgeräte-Emulationsserver (100) zu Folgendem konfiguriert ist:
Initiieren des Weiterleitens von Kommunikationsverkehr des ersten Kommunikationsdiensts zu der E/A-Benutzervorrichtung vor der Vorhersage, dass sich der Benutzer in der Nähe der E/A-Benutzervorrichtung befinden wird, wobei die E/A-Benutzervorrichtung eines von Folgendem mit dem Kommunikationsverkehr durchführt: Initiieren der Wiedergabe des Kommunikationsverkehrs über die E/A-Benutzerschnittstelle; Puffern des Kommunikationsverkehrs zur anschließenden Wiedergabe über die E/A-Benutzerschnittstelle in Reaktion darauf, dass sich der Benutzer in der Nähe der E/A-Benutzervorrichtung befinden wird; und Verwerfen des Kommunikationsverkehrs, bis sich der Benutzer in der Nähe der E/A-Benutzervorrichtung befindet.

4. Benutzerendgeräte-Emulationsserver (100) nach einem der Ansprüche 1 bis 3, der ferner zu Folgendem konfiguriert ist:
Aufbauen einer Kommunikationssitzung mit der E/A-Benutzervorrichtung, die die E/A-Benutzervorrichtung mit dem Benutzerendgeräte-Emulationsserver (100) verbindet, bevor vorhergesagt wird, dass sich der Benutzer in der Nähe der E/A-Benutzervorrichtung befinden wird; und
in Reaktion auf das Bestimmen, dass sich der Benutzer in der Nähe der E/A-Benutzervorrichtung befindet, Initiieren des Weiterleitens von Kommunikationsverkehr des ersten Kommunikationsdiensts über die mit der E/A-Benutzervorrichtung aufgebaute Kommunikationssitzung und Beenden des Weiterleitens des Kommunikationsverkehrs des ersten Kommunikationsdiensts über eine andere Kommunikationssitzung, die mit einer vorher in der Nähe befindlichen E/A-Benutzervorrichtung aufgebaut wurde, die sich nicht mehr in der Nähe des Benutzers befindet.

5. Benutzerendgeräte-Emulationsserver (100) nach einem der Ansprüche 1 bis 4, wobei, um der E/A-Benutzervorrichtung zu signalisieren, sich zur Verwendung der E/A-Schnittstelle zum Bereitstellen des ersten Kommunikationsdiensts für den Benutzer über die Netzwerkentität (150) vorzubereiten, der Benutzerendgeräte-Emulationsserver (100) zu Folgendem konfiguriert ist:
Kommunizieren von Vorrichtungskonfigurationsdaten an die E/A-Benutzervorrichtung, die die E/A-Benutzervorrichtung zur Verwendung der E/A-Benutzerschnittstelle zum Bereitstellen des ersten Kommunikationsdiensts konfigurieren.

6. Benutzerendgeräte-Emulationsserver (100) nach Anspruch 5, wobei:
die an die E/A-Benutzervorrichtung kommunizierten Vorrichtungskonfigurationsdaten zum Konfigurieren mindestens einer der folgenden Operationen der E/A-Benutzervorrichtung ausgelegt sind:
relative Dauern eines Schlafzyklus und eines Wachzyklus, wobei während des Schlafzyklus die E/A-Benutzervorrichtung nicht zum Bereitstellen der UI-Fähigkeit für den Benutzer in der Lage ist und während des Wachzyklus die E/A-Benutzervorrichtung zum Bereitstellen der UI-Fähigkeit für den Benutzer in der Lage ist;
eine Funkrufprozedur der E/A-Benutzervorrichtung;
eine Framerate von Video, das von einer Kamera der E/A-Benutzervorrichtung zur Netzwerkentität (150) gestreamt werden soll, wenn der erste Kommunikationsdienst über die E/A-Benutzervorrichtung bereitgestellt wird;
eine Auflösung von Video, das von der Kamera der E/A-Benutzervorrichtung zur Netzwerkentität (150) gestreamt werden soll, wenn der erste Kommunikationsdienst über die E/A-Benutzervorrichtung bereitgestellt wird;
ein Codierungsformat von Video, das von der Kamera der E/A-Benutzervorrichtung zur Netzwerkentität (150) gestreamt werden soll, wenn der erste Kommunikationsdienst über die E/A-Benutzervorrichtung bereitgestellt wird;
ein Codierungsformat von Audio, das von einem Mikrofon der E/A-Benutzervorrichtung zur Netzwerkentität (150) gestreamt werden soll, wenn der erste Kommunikationsdienst über die E/A-Benutzervorrichtung bereitgestellt wird;
eine Framerate von Video, das durch einen Anzeigebildschirm der E/A-Benutzervorrichtung zur Netzwerkentität (150) angezeigt werden soll, wenn ein Videostrom von der Netzwerkentität (150) für den ersten Kommunikationsdienst empfangen wird;
eine Auflösung von Video, das durch einen Anzeigebildschirm der E/A-Benutzervorrichtung angezeigt werden soll, wenn ein Videostrom von der Netzwerkentität (150) für den ersten Kommunikationsdienst empfangen wird; und
Tastenzuweisungen der Benutzereingabeschnittstelle, die zum Übersetzen einer Benutzereingabe mittels der Benutzereingabeschnittstelle in vom Benutzer eingegebene Daten verwendet werden, die an die Netzwerkentität (150) gesendet werden, wenn der erste Kommunikationsdienst über die E/A-Benutzerschnittstelle bereitgestellt wird.

7. Benutzerendgeräte-Emulationsserver (100) nach einem der Ansprüche 1 bis 6, wobei zum Vorhersagen, dass sich die E/A-Benutzervorrichtung in der Nähe des Benutzers befinden wird, der Benutzerendgeräte-Emulationsserver (100) zu Folgendem konfiguriert ist:
Verarbeiten von Informationen, die eine gegenwärtige Nähe des Benutzers zu einer anderen E/A-Benutzervorrichtung angeben, durch ein Maschinenlernmodell (252), das basierend auf zeitlich geordneten Sequenzen von E/A-Benutzervorrichtungen trainiert wurde, die sich historischen Beobachtungen zufolge in der Nähe von Benutzern befinden werden; und
Vorhersagen, dass sich die E/A-Benutzervorrichtung in der Nähe des Benutzers befinden wird, basierend auf einer Ausgabe des Maschinenlernmodells aus der Verarbeitung der Informationen.

8. Benutzerendgeräte-Emulationsserver (100) nach Anspruch 7, der ferner zu Folgendem konfiguriert ist:
Trainieren des Maschinenlernmodells (252) basierend auf den zeitlich geordneten Sequenzen von E/A-Benutzervorrichtungen, die sich historischen Beobachtungen zufolge in der Nähe von Benutzern befinden werden.

9. Benutzerendgeräte-Emulationsserver (100) nach einem der Ansprüche 1 bis 8, der ferner zu Folgendem konfiguriert ist:
wiederholtes Senden einer Nachricht, die dazu konfiguriert ist, die E/A-Benutzervorrichtung auszulösen, um die E/A-Benutzervorrichtung zur Verwendung der E/A-Benutzerschnittstelle zum Bereitstellen des ersten Kommunikationsdiensts für den Benutzer vorzubereiten;
Verarbeiten von Informationen, die eine gegenwärtige Nähe des Benutzers zu einer anderen E/A-Benutzervorrichtung angeben, durch ein Maschinenlernmodell (252), das basierend auf zeitlich geordneten Sequenzen von E/A-Benutzervorrichtungen unter im Repository identifizierten E/A-Benutzervorrichtungen trainiert wurde, die sich historischen Beobachtungen zufolge in der Nähe von Benutzern befinden werden, um eine angegebene Wahrscheinlichkeit auszugeben, dass sich der Benutzer in der Nähe der E/A-Benutzervorrichtung befinden wird; und
Anpassen einer Rate, mit der die Nachricht wiederholt gesendet wird, basierend auf der angegebenen Wahrscheinlichkeit.

10. Benutzerendgeräte-Emulationsserver (100) nach einem der Ansprüche 1 bis 9, wobei zum Vorhersagen, dass sich die E/A-Benutzervorrichtung in der Nähe des Benutzers befinden wird, der Benutzerendgeräte-Emulationsserver (100) zu Folgendem konfiguriert ist:
Verarbeiten einer Tageszeit und eines Datums durch ein Maschinenlernmodell (252), das basierend auf einer historisch beobachteten Nähe zwischen identifizierten Benutzern und identifizierten E/A-Benutzervorrichtungen zu identifizierten Zeit- und Datumsangaben trainiert wurde, um Wahrscheinlichkeitsvorhersagen dessen auszugeben, welche der identifizierten Benutzer sich voraussichtlich in der Nähe der identifizierten E/A-Benutzervorrichtungen befinden werden; und
Vorhersagen, ob sich die E/A-Benutzervorrichtung in der Nähe des Benutzers befinden wird, basierend auf einer Identität des Benutzers und den durch das Maschinenlernmodell (252) ausgegebenen Wahrscheinlichkeitsvorhersagen.

11. Benutzerendgeräte-Emulationsserver (100) nach einem der Ansprüche 1 bis 10, wobei zum Vorhersagen, dass sich die E/A-Benutzervorrichtung in der Nähe des Benutzers befinden wird, der Benutzerendgeräte-Emulationsserver (100) zu Folgendem konfiguriert ist:
Verarbeiten eines gegenwärtigen geografischen Standorts des Benutzers durch ein Maschinenlernmodell (252), das basierend auf geografischen Standorten der E/A-Benutzervorrichtungen trainiert wurde; und
Vorhersagen, ob sich die E/A-Benutzervorrichtung in der Nähe des Benutzers befinden wird, basierend auf einer Ausgabe des Maschinenlernmodells (252) aus der Verarbeitung des gegenwärtigen geografischen Standorts des Benutzers.

12. Benutzerendgeräte-Emulationsserver (100) nach einem der Ansprüche 1 bis 11, wobei zum Bestimmen, dass die E/A-Benutzerschnittstelle der E/A-Benutzervorrichtung das Fähigkeitskriterium erfüllt, der Benutzerendgeräte-Emulationsserver (100) zu Folgendem konfiguriert ist:
Verarbeiten einer Benutzerschnittstellenfähigkeit der E/A-Benutzerschnittstelle der E/A-Benutzervorrichtung und einer Angabe des ersten der Kommunikationsdienste durch ein Maschinenlernmodell (252), das basierend auf Benutzerschnittstellenfähigkeiten trainiert wurde, die verschiedenen Typen von Kommunikationstypen entsprechen müssen; und
Bestimmen, ob das Fähigkeitskriterium erfüllt wird, basierend auf einer Ausgabe des Maschinenlernmodells (252) aus der Verarbeitung der Benutzerschnittstellenfähigkeit der E/A-Benutzerschnittstelle und der Angabe des ersten der Kommunikationsdienste.

13. Benutzerendgeräte-Emulationsserver (100) nach einem der Ansprüche 1 bis 12, der ferner zu Folgendem konfiguriert ist:
Verarbeiten eines vorhergesagten nächsten Standorts des Benutzers durch ein Maschinenlernmodell (252), das basierend auf historisch beobachteten Sätzen der E/A-Benutzervorrichtungen trainiert wurde, die zur Verwendung durch Benutzer ausgewählt wurden, die sich bei Verwendung des Kommunikationsdiensts in der Nähe des nächsten Standorts befanden, um Kandidatensätze der E/A-Benutzervorrichtungen auszugeben;
Auswählen eines ersten Satzes der E/A-Benutzervorrichtungen aus den Kandidatensätzen der E/A-Benutzervorrichtungen, die einen Satz von E/A-Benutzerschnittstellen aufweisen, der das Fähigkeitskriterium erfüllt, um den Benutzer zum Verwenden des ersten der Kommunikationsdienste zu befähigen; und
vor der Vorhersage, dass sich der Benutzer in der Nähe des ersten Satzes der E/A-Benutzervorrichtungen befinden wird, Signalisieren an den ersten Satz der E/A-Benutzervorrichtungen, sich zur Verwendung des Satzes von E/A-Benutzerschnittstellen zum Bereitstellen des ersten Kommunikationsdiensts für den Benutzer über die Netzwerkentität (150) vorzubereiten.

14. Verfahren zur Bereitstellung von Kommunikationsdiensten über eine oder mehrere Eingabe- und/oder Ausgabe-Benutzervorrichtungen, E/A-Benutzervorrichtungen, für einen Benutzer, wobei das Verfahren Folgendes umfasst:
Anmelden (1202) des Benutzers bei einer Netzwerkentität, die die Kommunikationsdienste bereitstellt;
Vorhersagen (1204, 1008, 1012, 1102, 1104), dass sich eine E/A-Benutzervorrichtung in der Nähe des Benutzers befinden wird; und
basierend auf der Vorhersage, dass sich die E/A-Benutzervorrichtung in der Nähe des Benutzers befinden wird,
Bestimmen (1206, 1016, 1108), dass die E/A-Benutzervorrichtung eine E/A-Benutzerschnittstelle aufweist, die ein Fähigkeitskriterium erfüllt, um den Benutzer zum Verwenden eines ersten der Kommunikationsdienste zu befähigen, wobei das Verfahren **dadurch gekennzeichnet ist, dass** es ferner Folgendes umfasst:
basierend auf der Erfüllung des Fähigkeitskriteriums und vor der Vorhersage, dass sich der Benutzer in der Nähe der E/A-Benutzervorrichtung befinden wird, Signalisieren (1208, 1018, 1110a-n) an die E/A-Benutzervorrichtung, sich zur Verwendung der E/A-Schnittstelle zum Bereitstellen des ersten Kommunikationsdiensts für den Benutzer über die Netzwerkentität (150) vorzubereiten,
wobei das Signalisieren (1208, 1018, 1110a-n) an die E/A-Benutzervorrichtung, sich zur Verwendung der E/A-Schnittstelle zum Bereitstellen des ersten Kommunikationsdiensts für den Benutzer über die Netzwerkentität (150) vorzubereiten, Folgendes umfasst:
Senden (1018, 1110a-n) einer Nachricht, die dazu konfiguriert ist, die E/A-Benutzervorrichtung auszulösen, um dem Benutzerendgeräte-Emulationsserver (100) zu melden, wenn sich der Benutzer in der Nähe befindet.

15. Computerprogrammprodukt, umfassend:
ein nicht-transitorisches computerlesbares Medium, das Programmanweisungen speichert, die von mindestens einem Prozessor eines Benutzerendgeräte-Emulationsservers zum Bereitstellen eines Kommunikationsdienstes über eine oder mehrere Eingabe- und/oder Ausgabe-Benutzervorrichtungen, E/A-Benutzervorrichtungen, für einen Benutzer durch Operationen ausgeführt werden können, die Folgendes umfassen:
Anmelden des Benutzers bei einer Netzwerkentität, die die Kommunikationsdienste bereitstellt;
Vorhersagen, dass sich eine E/A-Benutzervorrichtung in der Nähe des Benutzers befinden wird; und basierend auf der Vorhersage, dass sich die E/A-Benutzervorrichtung in der Nähe des Benutzers befinden wird,
Bestimmen, dass die E/A-Benutzervorrichtung eine E/A-Benutzerschnittstelle aufweist, die ein Fähigkeitskriterium erfüllt, um den Benutzer zum Verwenden eines ersten der Kommunikationsdienste zu befähigen, wobei das Computerprogrammprodukt **dadurch gekennzeichnet ist, dass** die Operationen ferner Folgendes umfassen:
basierend auf der Erfüllung des Fähigkeitskriteriums und vor der Vorhersage, dass sich der Benutzer in der Nähe der E/A-Benutzervorrichtung befinden wird, Signalisieren an die E/A-Benutzervorrichtung, sich zur Verwendung der E/A-Schnittstelle zum Bereitstellen des ersten Kommunikationsdiensts für den Benutzer über die Netzwerkentität vorzubereiten,
wobei das Signalisieren (1208, 1018, 1110a-n) an die E/A-Benutzervorrichtung, sich zur Verwendung der E/A-Schnittstelle zum Bereitstellen des ersten Kommunikationsdiensts für den Benutzer über die Netzwerkentität (150) vorzubereiten, Folgendes umfasst:
Senden (1018, 1110a-n) einer Nachricht, die dazu konfiguriert ist, die E/A-Benutzervorrichtung auszulösen, um dem Benutzerendgeräte-Emulationsserver (100) zu melden, wenn sich der Benutzer in der Nähe befindet.

## Revendications

1. Serveur d'émulation de terminal utilisateur (100) pour fournir des services de communication par l'intermédiaire d'un ou plusieurs dispositifs utilisateur d'entrée et/ou sortie, E/S, dans lequel le serveur d'émulation de terminal utilisateur (100) est configuré pour :
enregistrer l'utilisateur avec une entité de réseau (150) fournissant les services de communication ;
prédire qu'un dispositif utilisateur E/S va devenir situé à proximité de l'utilisateur ; et
sur la base de la prédiction que le dispositif utilisateur E/S va devenir situé à proximité de l'utilisateur,
déterminer que le dispositif utilisateur E/S présente une interface utilisateur E/S qui satisfait à un critère de capacité pour permettre à l'utilisateur d'utiliser un premier des services de communication, le serveur d'émulation de terminal utilisateur étant **caractérisé en ce qu'**il est en outre configuré pour
sur la base de la satisfaction du critère de capacité et avant la prédiction que l'utilisateur va devenir situé à proximité du dispositif utilisateur E/S, signaler au dispositif utilisateur E/S de se préparer à l'utilisation de l'interface utilisateur E/S pour fournir le premier service de communication pour l'utilisateur par l'intermédiaire de l'entité de réseau (150),
dans lequel, pour signaler au dispositif utilisateur E/S de se préparer à l'utilisation de l'interface utilisateur E/S pour fournir le premier service de communication pour l'utilisateur par l'intermédiaire de l'entité de réseau (150), le serveur d'émulation de terminal utilisateur (100) est configuré pour :
envoyer un message configuré pour déclencher le dispositif utilisateur E/S pour rapporter au serveur d'émulation de terminal utilisateur (100) quand l'utilisateur est devenu situé à proximité.

2. Serveur d'émulation de terminal utilisateur (100) selon la revendication 1, configuré en outre pour :
envoyer répétitivement le message ; et
ajuster une fréquence à laquelle le message est envoyé répétitivement sur la base d'au moins l'une parmi : une probabilité déterminée que le dispositif utilisateur E/S va devenir situé à proximité de l'utilisateur ; et une prédiction du moment auquel le dispositif utilisateur E/S va devenir situé à proximité de l'utilisateur.

3. Serveur d'émulation de terminal utilisateur (100) selon la revendication 1 ou 2, dans lequel, pour signaler au dispositif utilisateur E/S de se préparer à l'utilisation de l'interface utilisateur E/S pour fournir le premier service de communication pour l'utilisateur par l'intermédiaire de l'entité de réseau (150), le serveur d'émulation de terminal utilisateur (100) est configuré pour :
initier un acheminement d'un trafic de communication du premier service de communication au dispositif utilisateur E/S avant la prédiction que l'utilisateur va devenir situé à proximité du dispositif utilisateur E/S, dans lequel le dispositif utilisateur E/S réalise l'un de ce qui suit avec le trafic de communication : l'initiation d'une lecture du trafic de communication par l'intermédiaire de l'interface utilisateur E/S ; la mise en mémoire tampon du trafic de communication pour une lecture ultérieure par l'intermédiaire de l'interface utilisateur E/S en réponse au fait que l'utilisateur devient situé à proximité du dispositif utilisateur E/S ; et le rejet du trafic de communication jusqu'à ce que l'utilisateur devienne situé à proximité du dispositif utilisateur E/S.

4. Serveur d'émulation de terminal utilisateur (100) selon l'une quelconque des revendications 1 à 3, configuré en outre pour :
établir une session de communication avec le dispositif utilisateur E/S qui connecte le dispositif utilisateur E/S au serveur d'émulation de terminal utilisateur (100) avant la prédiction que l'utilisateur va devenir situé à proximité du dispositif utilisateur E/S ; et
en réponse à la détermination que l'utilisateur est devenu situé à proximité du dispositif utilisateur E/S, initier un acheminement d'un trafic de communication du premier service de communication par l'intermédiaire de la session de communication établie avec le dispositif utilisateur E/S et arrêter l'acheminement du trafic de communication du premier service de communication par l'intermédiaire d'une autre session de communication établie avec un dispositif utilisateur E/S précédemment situé à proximité qui n'est plus situé à proximité de l'utilisateur.

5. Serveur d'émulation de terminal utilisateur (100) selon l'une quelconque des revendications 1 à 4, dans lequel, pour signaler au dispositif utilisateur E/S de se préparer à l'utilisation de l'interface utilisateur E/S pour fournir le premier service de communication pour l'utilisateur par l'intermédiaire de l'entité de réseau (150), le serveur d'émulation de terminal utilisateur (100) est configuré pour :
communiquer des données de configuration de dispositif au dispositif utilisateur E/S qui configurent le dispositif utilisateur E/S pour utiliser l'interface utilisateur E/S pour fournir le premier service de communication.

6. Serveur d'émulation de terminal utilisateur (100) selon la revendication 5, dans lequel :
les données de configuration de dispositif communiquées au dispositif utilisateur E/S sont adaptées pour configurer au moins l'une des opérations suivantes du dispositif utilisateur E/S :
des durées relatives d'un cycle de sommeil et d'un cycle d'éveil, dans lequel, pendant le cycle de sommeil, le dispositif utilisateur E/S n'est pas capable de fournir la capacité d'UI à l'utilisateur et, pendant le cycle d'éveil, le dispositif utilisateur E/S est capable de fournir la capacité d'UI à l'utilisateur ;
une procédure de radiomessagerie du dispositif utilisateur E/S ;
un débit de trame d'une vidéo à diffuser en streaming depuis une caméra du dispositif utilisateur E/S vers l'entité de réseau (150) lorsque le premier service de communication est fourni par l'intermédiaire du dispositif utilisateur E/S ;
une résolution de la vidéo à diffuser en streaming depuis la caméra du dispositif utilisateur E/S vers l'entité de réseau (150) lorsque le premier service de communication est fourni par l'intermédiaire du dispositif utilisateur E/S ;
un format de codage d'une vidéo à diffuser en streaming depuis la caméra du dispositif utilisateur E/S vers l'entité de réseau (150) lorsque le premier service de communication est fourni par l'intermédiaire du dispositif utilisateur E/S ;
un format de codage d'un audio à diffuser en streaming depuis un microphone du dispositif utilisateur E/S vers l'entité de réseau (150) lorsque le premier service de communication est fourni par l'intermédiaire du dispositif utilisateur E/S ;
un débit de trame d'une vidéo à afficher par un écran d'affichage du dispositif utilisateur E/S vers l'entité de réseau (150) lorsqu'un flux vidéo est reçu depuis l'entité de réseau (150) pour le premier service de communication ;
une résolution d'une vidéo à afficher par un écran d'affichage du dispositif utilisateur E/S lorsqu'un flux vidéo est reçu depuis l'entité de réseau (150) pour le premier service de communication ; et
des attributions de touches d'interface d'entrée utilisateur utilisées pour traduire une entrée utilisateur via l'interface d'entrée utilisateur en données entrées par un utilisateur qui seront envoyées vers l'entité de réseau (150) lorsque le premier service de communication est fourni par l'intermédiaire du dispositif utilisateur E/S.

7. Serveur d'émulation de terminal utilisateur (100) selon l'une quelconque des revendications 1 à 6, dans lequel, pour prédire que le dispositif utilisateur E/S va devenir situé à proximité de l'utilisateur, le serveur d'émulation de terminal utilisateur (100) est configuré pour :
traiter des informations indiquant une proximité présente de l'utilisateur par rapport à un autre dispositif utilisateur E/S par l'intermédiaire d'un modèle d'apprentissage automatique (252) qui a été entraîné sur la base de séquences chronologiques de dispositifs utilisateur E/S qui ont été historiquement observés comme devenant situés à proximité d'utilisateurs ; et
prédire que le dispositif utilisateur E/S va devenir situé à proximité de l'utilisateur sur la base d'une sortie du modèle d'apprentissage automatique à partir du traitement des informations.

8. Serveur d'émulation de terminal utilisateur (100) selon la revendication 7, configuré en outre pour :
entraîner le modèle d'apprentissage automatique (252) sur la base des séquences chronologiques de dispositifs utilisateur E/S qui ont été historiquement observés comme devenant situés à proximité d'utilisateurs.

9. Serveur d'émulation de terminal utilisateur (100) selon l'une quelconque des revendications 1 à 8, configuré en outre pour :
envoyer répétitivement un message configuré pour déclencher le dispositif utilisateur E/S pour préparer le dispositif utilisateur E/S à l'utilisation de l'interface utilisateur E/S pour fournir le premier service de communication pour l'utilisateur ;
traiter des informations indiquant une proximité présente de l'utilisateur par rapport à un autre dispositif utilisateur E/S par l'intermédiaire d'un modèle d'apprentissage automatique (252) qui a été entraîné sur la base de séquences chronologiques de dispositifs utilisateur E/S parmi les dispositifs utilisateur E/S identifiés dans le référentiel qui ont été historiquement observés comme devenant situés à proximité d'utilisateurs, pour délivrer une probabilité indiqué que l'utilisateur va être situé à proximité du dispositif utilisateur E/S ; et
ajuster une fréquence à laquelle le message est envoyé répétitivement sur la base de la probabilité indiquée.

10. Serveur d'émulation de terminal utilisateur (100) selon l'une quelconque des revendications 1 à 9, dans lequel, pour prédire que le dispositif utilisateur E/S va devenir situé à proximité de l'utilisateur, le serveur d'émulation de terminal utilisateur (100) est configuré pour :
traiter une heure de la journée et une date par l'intermédiaire d'un modèle d'apprentissage automatique (252) qui a été entraîné sur la base d'une proximité historiquement observée entre des utilisateurs identifiés et des dispositifs utilisateur E/S identifiés à des heures et des dates identifiées, pour délivrer des prédictions de probabilité de ceux des utilisateurs identifiés qui sont prédits pour devenir situés à proximité de dispositifs utilisateur E/S identifiés ; et
prédire si le dispositif utilisateur E/S va ou non devenir situé à proximité de l'utilisateur sur la base d'une identité de l'utilisateur et des prédictions de probabilité délivrées par le modèle d'apprentissage automatique (252).

11. Serveur d'émulation de terminal utilisateur (100) selon l'une quelconque des revendications 1 à 10, dans lequel, pour prédire que le dispositif utilisateur E/S va devenir situé à proximité de l'utilisateur, le serveur d'émulation de terminal utilisateur (100) est configuré pour :
traiter un emplacement géographique présent de l'utilisateur par l'intermédiaire d'un modèle d'apprentissage automatique (252) qui a été entraîné sur la base d'emplacements géographiques des dispositifs utilisateur E/S ; et
prédire si le dispositif utilisateur E/S va ou non devenir situé à proximité de l'utilisateur sur la base d'une sortie du modèle d'apprentissage automatique (252) à partir du traitement de l'emplacement géographique présent de l'utilisateur.

12. Serveur d'émulation de terminal utilisateur (100) selon l'une quelconque des revendications 1 à 11, dans lequel, pour déterminer que l'interface utilisateur E/S du dispositif utilisateur E/S satisfait au critère de capacité, le serveur d'émulation de terminal utilisateur (100) est configuré pour :
traiter une capacité d'interface utilisateur de l'interface utilisateur E/S du dispositif utilisateur E/S et une indication du premier des services de communication par l'intermédiaire d'un modèle d'apprentissage automatique (252) qui a été entraîné sur la base de capacités d'interface utilisateur qui sont nécessaires pour satisfaire à différents types de services de communication ; et
déterminer si le critère de capacité est ou non satisfait sur la base d'une sortie du modèle d'apprentissage automatique (252) à partir du traitement de la capacité d'interface utilisateur de l'interface utilisateur E/S et de l'indication du premier des services de communication.

13. Serveur d'émulation de terminal utilisateur (100) selon l'une quelconque des revendications 1 à 12, configuré en outre pour :
traiter un emplacement suivant prédit de l'utilisateur par l'intermédiaire d'un modèle d'apprentissage automatique (252) qui a été entraîné sur la base d'ensembles historiquement observés des dispositifs utilisateur E/S qui ont été sélectionnés pour être utilisés par des utilisateurs qui étaient situés à proximité de l'emplacement suivant lors de l'utilisation du service de communication, pour délivrer des ensembles candidats des dispositifs utilisateur E/S ;
sélectionner un premier ensemble des dispositifs utilisateur E/S, parmi les ensembles candidats des dispositifs utilisateur E/S, qui présentent un ensemble d'interfaces utilisateur E/S qui satisfont aux critères de capacité pour permettre à l'utilisateur d'utiliser le premier des services de communication ; et
avant la prédiction que l'utilisateur va devenir situé à proximité du premier ensemble des dispositifs utilisateur E/S, signaler au premier ensemble des dispositifs utilisateur E/S de se préparer à l'utilisation de l'ensemble d'interfaces utilisateur E/S pour fournir le premier service de communication pour l'utilisateur par l'intermédiaire de l'entité de réseau (150).

14. Procédé pour fournir des services de communication par l'intermédiaire d'un ou plusieurs dispositifs utilisateur d'entrée et/ou sortie, E/S, le procédé comprenant :
l'enregistrement (1202) de l'utilisateur avec une entité de réseau fournissant les services de communication ;
la prédiction (1204, 1008, 1012, 1102, 1104) qu'un dispositif utilisateur E/S va devenir situé à proximité de l'utilisateur ; et
sur la base de la prédiction que le dispositif utilisateur E/S va devenir situé à proximité de l'utilisateur,
la détermination (1206, 1016, 1108) que le dispositif utilisateur E/S présente une interface utilisateur E/S qui satisfait à un critère de capacité pour permettre à l'utilisateur d'utiliser un premier des services de communication, le procédé étant **caractérisé en ce qu'**il comprend en outre
sur la base de la satisfaction du critère de capacité et avant la prédiction que l'utilisateur va devenir situé à proximité du dispositif utilisateur E/S, la signalisation (1208, 1018, 1110a-n) au dispositif utilisateur E/S de se préparer à l'utilisation de l'interface utilisateur E/S pour fournir le premier service de communication pour l'utilisateur par l'intermédiaire de l'entité de réseau (150),
dans lequel la signalisation (1208, 1018, 1110a-n) au dispositif utilisateur E/S de se préparer à l'utilisation de l'interface utilisateur E/S pour fournir le premier service de communication pour l'utilisateur par l'intermédiaire de l'entité de réseau (150) comprend :
l'envoi (1018, 1110a-n) d'un message configuré pour déclencher le dispositif utilisateur E/S pour rapporter au serveur d'émulation de terminal utilisateur (100) quand l'utilisateur est devenu situé à proximité.

15. Produit programme informatique comprenant :
un support non transitoire lisible par ordinateur stockant des instructions de programme exécutables par au moins un processeur d'un serveur d'émulation de terminal utilisateur pour fournir des services de communication par l'intermédiaire d'un ou plusieurs dispositifs utilisateur d'entrée et/ou sortie, E/S, à un utilisateur par l'intermédiaire d'opérations comprenant :
l'enregistrement de l'utilisateur avec une entité de réseau fournissant les services de communication ;
la prédiction qu'un dispositif utilisateur E/S va devenir situé à proximité de l'utilisateur ; et
sur la base de la prédiction que le dispositif utilisateur E/S va devenir situé à proximité de l'utilisateur,
la détermination que le dispositif utilisateur E/S présente une interface utilisateur E/S qui satisfait à un critère de capacité pour permettre à l'utilisateur d'utiliser un premier des services de communication, le produit programme informatique étant **caractérisé en ce que** les opérations comprennent en outre :
sur la base de la satisfaction du critère de capacité et avant la prédiction que l'utilisateur va devenir situé à proximité du dispositif utilisateur E/S, la signalisation au dispositif utilisateur E/S de se préparer à l'utilisation de l'interface utilisateur E/S pour fournir le premier service de communication pour l'utilisateur par l'intermédiaire de l'entité de réseau,
dans lequel la signalisation (1208, 1018, 1110a-n) au dispositif utilisateur E/S de se préparer à l'utilisation de l'interface utilisateur E/S pour fournir le premier service de communication pour l'utilisateur par l'intermédiaire de l'entité de réseau (150) comprend :
l'envoi (1018, 1110a-n) d'un message configuré pour déclencher le dispositif utilisateur E/S pour rapporter au serveur d'émulation de terminal utilisateur (100) quand l'utilisateur est devenu situé à proximité.
